# EUROPÄISCHE PATENTSCHRIFT

(11) **EP 3 372 514 B1**
(45) Veröffentlichungstag und Bekanntmachung des Hinweises auf die Patenterteilung: **01.07.2020**
(21) Anmeldenummer: 18155565.7
(22) Anmeldetag: 07.02.2018
(51) Int. Cl.: B65B 35/44, B65B 35/24, B65B 59/02, B65G 21/12, B65G 21/10, B65G 47/52

(54) **TRANSPORTABSCHNITT EINER VERPACKUNGSSTRECKE SOWIE VERFAHREN ZUM MODIFIZIEREN EINER FÜR ARTIKEL ODER ZUSAMMENSTELLUNGEN AN ARTIKELN VORGESEHENEN VERPACKUNGSSTRECKE**
TRANSPORT SECTION OF A PACKAGING CONVEYOR AND METHOD FOR MODIFYING A PACKAGING PATH FOR ARTICLES OR COMPOSITIONS OF ARTICLES
TRONÇON DE TRANSPORT D'UNE LIGNE D'EMBALLAGE AINSI QUE PROCÉDÉ DE MODIFICATION D'UNE LIGNE D'EMBALLAGE POURVUE D'ARTICLES OU D'ASSORTIMENTS D'ARTICLES

(30) Priorität: 06.03.2017 DE 102017203581
(43) Veröffentlichungstag der Anmeldung: 12.09.2018
(73) Patentinhaber: Krones Aktiengesellschaft, 93073 Neutraubling (DE)
(72) Erfinder: SPINDLER, Herbert, 93073 Neutraubling (DE); WERNER, Jürgen, 93073 Neutraubling (DE); WITTMANN, Stephan, 93073 Neutraubling (DE); TRETER, Olaf, 93073 Neutraubling (DE)
(74) Vertreter: Benninger, Johannes

(56) Entgegenhaltungen:
- EP-A1- 2 336 037
- WO-A1-2012/062549
- WO-A1-2016/059218
- DE-A1-102015 107 630
- DE-A1-102015 211 955
- US-A1- 2012 023 866

## Beschreibung

Die vorliegende Erfindung betrifft ein System zum Ausbilden eines Transportabschnittes für eine Verpackungsstrecke mit mindestens zwei unterschiedlichen austauschbaren Modulen. Zudem betrifft die Erfindung ein Verfahren zum Modifizieren einer für Artikel oder Zusammenstellungen an Artikeln vorgesehenen Verpackungsstrecke.

Für eine Verarbeitung, Zusammenstellung, Gruppierung und Verpackung von Artikeln, wie bspw. Getränkebehältern, gibt es unterschiedliche Arten für ihre Verpackung. Derzeit bspw. als Getränkebehälter am häufigsten eingesetzte PET-Behälter weisen relativ geringe Wandstärken auf und sind auch im befüllten Zustand nicht völlig formstabil. Aus diesem Grunde und im Hinblick auf die bessere logistische Handhabbarkeit werden die verschiedensten Verpackungen für gruppierte Einzelbehälter verwendet. So können die Behälter in gruppierter Anordnung bspw. auf einen Kartonbogen gestellt werden, dessen Ränder nach oben gefalzt werden. Auch können Kartonbögen eingesetzt werden, deren Größe mindestens der Grundfläche einer Gebindeanordnung entspricht, und auf welche die einzelnen als Bestandteil eines Gebindes ausgebildeten Behälter bzw. Getränkebehältnisse aufstehen.

Wahlweise können diese Gebindeanordnungen anschließend mit thermoplastischer Folie umhüllt werden, wobei die thermoplastische Folie mittels eines Erwärmungsprozesses anschließend auf die als Bestandteil eines jeweiligen Gebindes ausgebildeten Getränkebehältnisse geschrumpft wird, um einen stabilen Gebindeverbund zu erhalten, der leicht transportiert und gestapelt werden kann. Eine weitere Gebindevariante wird als "Shrink-only" bezeichnet, da hierbei die zusammengestellten Behälter ohne weiteres Verpackungsmaterial bzw. ohne weitere Zuschnitte mit thermoplastischer Folie umhüllt werden und die thermoplastische Folie nachfolgend auf die jeweiligen zusammengestellten Behälter aufgeschrumpft wird.

Die Formstabilität dieser Gebindevariante wird ausschließlich von der Schrumpffolie gewährleistet. Bekannte Verpackungsmaschinen und deren Fördereinrichtungen sind normalerweise jeweils auf eine bestimmte Art, Größe und/oder Kontur von Fördergütern optimiert. Zudem werden für verschiedene Gebinde- und Verpackungsarten jeweils verschiedene Fördereinrichtungen benötigt. Ein Produktwechsel kann unter Umständen dazu führen, dass bestimmte Fördereinrichtungen nicht mehr eingesetzt werden können, da sie bspw. nicht für den Transport von einzelnen Artikeln oder Behältern und deren jeweiliges Verpackungsmaterial geeignet sind. Störungen im Transport der Artikel können auch dann auftreten, wenn die Verpackungsmaschinen auf eine jeweils andere Produktvariante eingestellt sind. Solche Förderprobleme können insbesondere bei einem Wechsel zwischen verpackten Gütern wie bspw. Gebindeeinheiten und losen Gütern wie einzelnen Getränkebehältern o. dgl. auftreten. Solche aufrecht stehend zu befördernden Artikel wie Getränkebehälter können auf Fördereinrichtungen, die für den Transport von Gebindeeinheiten vorbereitet sind, leicht kippen und/oder herabfallen, da die Transportmodule möglicherweise keine ausreichend ebenen Unterlagen bieten können, die einen stabilen Transport von Gegenständen mit sehr kleiner Grundfläche ermöglichen. In der Praxis werden Transporteinheiten aus diesem Grund ausgewechselt.

Um solche Probleme zu vermeiden, sind aus dem Stand der Technik bereits Vorrichtungen bekannt, welche mehrere Module aufweisen, die austauschbar bzw. wahlweise in einen bestimmten Abschnitt einer Transportstrecke eingebracht werden können. Eine solche Vorrichtung nach dem Oberbegriff von Anspruch 1 offenbart beispielsweise die WO 2012/062549 A1. Die in diesem Dokument beschriebene Vorrichtung betrifft eine Maschine zur Verarbeitung und/oder Verpackung von Gegenständen mit einer im Wesentlichen horizontalen Transportstrecke zur Förderung von Artikeln, Gebinden und/oder Verpackungseinheiten. Die Maschine umfasst eine erste Horizontalfördereinrichtung mit wenigstens einem Transportmittel für einen ersten Betriebsmodus, welche zur Herstellung mindestens eines weiteren Betriebsmodus durch eine weitere Horizontalfördereinrichtung mit wenigstens einem zum ersten Transportmittel unterschiedlichen zweiten Transportmittel auswechselbar ist.

Aus der US 2012/023866 A1 ist zudem eine Verpackungsanlage bekannt, welche zwei umlaufende Gurtbandförderer umfasst, die zum Transport von Getränkebehältern mit hierauf aufgebrachtem Verpackungsmaterial ausgebildet sind. Die umlaufenden Gutbandförderer können auseinanderbewegt werden, woraufhin zwei Horizontalfördereinrichtungen in eine durch das Auseinanderbewegen gebildeten Freiraum eingebracht werden und sodann anstelle der umlaufenden Gurtbandförderer die Getränkebehälter transportieren. Über ein Auslaufband werden die Getränkebehälter jeweils an einen Schrumpftunnel weitergeführt.

Die Praxis hat gezeigt, dass ein Auswechseln von Horizontalfördereinrichtungen für unterschiedliche Betriebsmodi einen gewissen Zeitaufwand erfordert, welcher zum schnellen Umrüsten einer solchen Maschine auf die unterschiedlichen Betriebsmodi nach Möglichkeit gering gehalten werden soll. Auch ist ein Austauschen bzw. Wechseln von Horizontalfördereinrichtungen für unterschiedliche Betriebsmodi umständlich, so dass Vorrichtungen und Verfahren wünschenswert sind, mittels welchen ein Umrüsten vereinfacht erfolgen kann.

Eine Aufgabe der Erfindung kann aus diesem Grunde darin gesehen werden, eine gattungsgemäße Vorrichtung bzw. ein entsprechendes Verfahren zur Verfügung zu stellen, welche zeitoptimiert umgerüstet bzw. an unterschiedliche Betriebsmodi angepasst werden kann. Zudem soll die Vorrichtung einen einfachen Aufbau besitzen und das Verfahren einfach umgesetzt werden können.

Die obigen Aufgaben werden durch eine Vorrichtung nach dem unabhängigen Anspruch 1 sowie ein Verfahren nach dem unabhängigen Anspruch 10 gelöst. Weitere vorteilhafte Ausgestaltungen werden durch die Unteransprüche beschrieben.

Die Erfindung betrifft ein System zum Ausbilden eines Transportabschnittes für eine Verpackungsstrecke und zum Abstimmen des Transportabschnittes auf einzelne Artikel oder Zusammenstellungen an Artikeln mit unterschiedlichen Verpackungsarten. Die einzelnen Artikel können durch einzelne Getränkebehältnisse und insbesondere durch einzelne PET-Flaschen ausgebildet sein. Die Zusammenstellungen an Artikeln können durch für ein jeweiliges Gebinde vorgesehene Zusammenstellungen aus mehreren Getränkebehältnissen und insbesondere durch für ein jeweiliges Gebinde vorgesehene Zusammenstellungen aus mehreren PET-Flaschen ausgebildet sein.

Das System umfasst mindestens ein Modul, welches mindestens eine Modul mindestens zwei einzelne Moduleinheiten besitzt. Die mindestens zwei einzelnen Moduleinheiten arbeiten in einem ersten Betriebsmodul des Systems zum Transport für eine erste Verpackungsart vorgesehener einzelner Artikel oder Zusammenstellungen an Artikeln zusammen. Es kann sein, dass die mindestens zwei einzelnen Moduleinheiten im ersten Betriebsmodus ohne eine mechanische Koppelung zum Transport für eine erste Verpackungsart vorgesehener einzelne Artikel oder Zusammenstellungen an Artikeln zusammenarbeiten. Demnach können die mindestens zwei einzelnen Moduleinheiten im ersten Betriebsmodus sowie in einem nachfolgend noch beschriebenen zweiten Betriebsmodus jeweils vollständig mechanisch voneinander getrennt sein. Es haben sich daher Ausführungsformen bewährt, bei welchen die mindestens zwei Moduleinheiten ohne ein Lösen mechanischer Verbindungen relativ zueinander bewegbar sind. Es kann demnach sein, dass die mindestens zwei einzelnen Moduleinheiten jeweils eigenständig arbeiten können. Insbesondere kann es sein, dass jeder der mindestens zwei einzelnen Moduleinheiten wenigstens ein eigener Aktor bzw. wenigstens ein eigener Motor zugeordnet ist, über welchen die jeweilige Moduleinheit zum Transport für eine erste Verpackungsart vorgesehener einzelne Artikel oder Zusammenstellungen an Artikeln im ersten Betriebsmodus betätigt bzw. angetrieben werden kann. Der wenigstens eine eigene Aktor bzw. eigene Motor wenigstens einer ersten der mindestens zwei Moduleinheiten sowie der wenigstens eine eigene Aktor bzw. eigene Motor wenigstens einer zweiten der mindestens zwei Moduleinheiten können mit einer gemeinsamen Steuer- und/oder Regeleinheit in Verbindung stehen, welche den wenigstens einen eigenen Aktor der wenigstens einen ersten Moduleinheit und den wenigstens einen eigenen Aktor der wenigstens einen zweiten Moduleinheit zum Transport für eine erste Verpackungsart vorgesehener einzelner Artikel oder Zusammenstellungen an Artikeln im ersten Betriebsmodus aufeinander abgestimmt ansteuert.

Es ist zudem vorgesehen, dass die mindestens zwei einzelnen Moduleinheiten jeweils bewegbar ausgebildet sind und dass das System über eine Bewegung der mindestens zwei einzelnen Moduleinheiten in einen zweiten Betriebsmodus überführbar ist, der auf einen Transport für eine zweite Verpackungsart vorgesehener einzelner Artikel oder Zusammenstellungen an Artikeln ausgerichtet ist.

In der Praxis haben sich Ausführungsformen bewährt, bei welchen die mindestens zwei einzelnen Moduleinheiten für den zweiten Betriebsmodus in Richtung nach unten bewegbar sind und bei welchen das System eine Überschubplatte umfasst, welche für den zweiten Betriebsmodus auf die mindestens zwei einzelnen in Richtung nach unten bewegten Moduleinheiten aufgesetzt werden kann.

Es kann hierbei sein, dass das System mindestens eine vertikale Linearführung umfasst, an welche die mindestens zwei einzelnen Moduleinheiten für ihre Bewegung in Richtung nach unten mechanisch gekoppelt sind. Jede der mindestens zwei einzelnen Moduleinheiten kann hierbei an eine eigene vertikale Linearführung gekoppelt sein.

Insbesondere kann das mindestens eine Modul auf einen Transport für eine erste Verpackungsart vorgesehener einzelner Artikel oder Zusammenstellungen an Artikeln ausgerichtet sein, welche erste Verpackungsart durch flächige Zuschnitte an Verpackungsmaterial mit aufzurichtenden seitlichen, vorderen und/oder hinteren Laschen ausgebildet ist. Solche flächigen Zuschnitte an Verpackungsmaterial mit aufzurichtenden seitlichen, vorderen und/oder hinteren Laschen werden in der Praxis und in der folgenden Beschreibung als Tray bezeichnet.

Weiter kann das System wenigstens ein weiteres Modul umfassen, welches wenigstens eine weitere Modul auf einen Transport für die zweite Verpackungsart vorgesehener einzelner Artikel oder Zusammenstellungen an Artikeln ausgerichtet ist. Die mindestens zwei einzelnen Moduleinheiten des mindestens einen ersten Moduls können relativ zueinander bewegbar sein. Zudem kann das wenigstens eine weitere Modul für den zweiten Betriebsmodus in eine mittels der relativen Bewegung der mindestens zwei einzelnen Moduleinheiten zueinander freigegebene Betriebsposition eingebracht werden.. Insbesondere kann das wenigstens eine zweite bzw. das wenigstens eine weitere Modul auf einen Transport für eine zweite Verpackungsart vorgesehener einzelner Artikel oder Zusammenstellungen an Artikeln ausgerichtet sein, welche zweite Verpackungsart durch flächige Zuschnitte an Verpackungsmaterial ohne aufzurichtende seitliche, vordere und/oder hintere Laschen ausgebildet ist. Die zweite Verpackungsart kann somit durch flächige Zuschnitte an Verpackungsmaterial ausgebildet sein, welche eine ebene oder im Wesentlichen ebene Standfläche für jeweilige einzelne Artikel oder jeweilige Zusammenstellungen an Artikeln bereitstellen. Solche flächigen Zuschnitte an Verpackungsmaterial werden in der Praxis und in nachfolgender Beschreibung als PAD bezeichnet.

Das System kann eine bestimmte Betriebsposition ausbilden, in welche bestimmte Betriebsposition wahlweise das mindestens eine Modul oder das wenigstens eine weitere Modul eingebracht werden kann. Die bestimmte Betriebsposition kann einem Transportabschnitt einer Verpackungsstrecke zugeordnet sein bzw. einen Transportabschnitt einer Verpackungsstrecke ausbilden. Somit kann es sein, dass das mindestens eine Modul und das wenigstens eine weitere Modul abwechselnd in die bestimmte Betriebsposition überführbar sind bzw. abwechselnd in die bestimmte Betriebsposition eingebracht werden. Das jeweilige in die bestimmte Betriebsposition eingebrachte mindestens eine Modul bzw. wenigstens eine weitere Modul kann einen Bestandteil einer Verpackungsstrecke für die einzelnen Artikel oder Zusammenstellungen an Artikeln ausbilden.

Weiter kann es sein, dass das mindestens eine Modul aus mindestens zwei in der bestimmten Betriebsposition zusammenarbeitenden Moduleinheiten gebildet ist, welche mindestens zwei in der bestimmten Betriebsposition zusammenarbeitenden Moduleinheiten unter Freigabe der bestimmten Betriebsposition relativ zueinander bewegbar sind. Denkbar ist hierbei, dass die mindestens zwei Moduleinheiten des mindestens einen Moduls in der bestimmten Betriebsposition derart zusammenarbeiten, dass die mindestens zwei Moduleinheiten in der bestimmten Betriebsposition zum Transport einzelner Artikel oder Zusammenstellungen an Artikeln miteinander in Wirkverbindung stehen.

Weiter bilden die wenigstens eine erste Moduleinheit und die wenigstens eine zweite Moduleinheit der mindestens zwei einzelnen Moduleinheiten jeweils mehrere vorzugsweise umlaufend bewegte bzw. umlaufend geführte Faltfinger aus, welche mehreren bzw. jeweilige Vielzahl umlaufend bewegter bzw. umlaufend geführter Faltfinger zum Aufrichten von Laschen einzelner Zuschnitte an Verpackungsmaterial ausgebildet ist.

Insbesondere weist die wenigstens eine erste Moduleinheit eine erste Vielzahl an umlaufend bewegten Faltfingern auf, welche zum Aufrichten in Transportrichtung vorauseilender bzw. vorderer Laschen einzelner Zuschnitte an Verpackungsmaterial vorbereitet sind. Zudem weist die wenigstens eine zweite Moduleinheit eine zweite Vielzahl an umlaufend bewegten Faltfingern auf, welche zweite Vielzahl an umlaufend bewegten Faltfingern zum Aufrichten von hinteren Laschen einzelner Zuschnitte an Verpackungsmaterial vorbereitet sind. Die erste Vielzahl an Faltfingern kann über eine erste als Bestandteil der ersten Moduleinheit ausgebildete Kette umlaufend bewegt werden bzw. umlaufend geführt sein. Die zweite Vielzahl an Faltfingern kann über eine zweite ebenso als Bestandteil der wenigstens einen ersten Moduleinheit ausgebildete Kette umlaufend bewegt werden bzw. umlaufend geführt sein. Die erste Kette und die zweite Kette können parallel zueinander verlaufen. Auch können die erste Kette und die zweite Kette sowie die mit der ersten Kette und der zweiten Kette in Verbindung stehende erste und zweite Vielzahl an Faltfingern zusammen mit der wenigstens einen ersten Moduleinheit unter Freigabe der vorherig bereits erwähnten bestimmten Betriebsposition bzw. zum Überführen des Systems in den zweiten Betriebsmodus ggf. aus der bestimmten Betriebsposition entnommen werden bzw. ggf. relativ gegenüber der wenigstens einen zweiten Moduleinheit bewegt werden.

Auch weist die wenigstens eine zweite Moduleinheit eine erste Vielzahl an umlaufend bewegten Faltfingern auf, welche zum Aufrichten in Transportrichtung vorauseilender bzw. vorderer Laschen einzelner Zuschnitte an Verpackungsmaterial vorbereitet sind. Zudem weist die wenigstens eine zweite Moduleinheit eine zweite Vielzahl an umlaufend bewegten Faltfingern auf, welche zweite Vielzahl an umlaufend bewegten Faltfingern zum Aufrichten von hinteren Laschen einzelner Zuschnitte an Verpackungsmaterial vorbereitet sind. Die zweite Vielzahl an Faltfingern kann über eine zweite ebenso als Bestandteil der wenigstens einen zweiten Moduleinheit ausgebildete Kette umlaufend bewegt werden bzw. umlaufend geführt sein. Die erste Kette und die zweite Kette können parallel zueinander verlaufen. Auch können die erste Kette und die zweite Kette sowie die mit der ersten Kette und der zweiten Kette in Verbindung stehende erste und zweite Vielzahl an Faltfingern der wenigstens einen zweiten Moduleinheit zusammen mit der wenigstens einen zweiten Moduleinheit unter Freigabe der vorherig bereits erwähnten bestimmten Betriebsposition bzw. zum Überführen des Systems in den zweiten Betriebsmodus ggf. aus der bestimmten Betriebsposition entnommen werden bzw. relativ gegenüber der wenigstens einen ersten Moduleinheit bewegt werden.

Bewährt haben sich Ausführungsformen, bei welchen die wenigstens eine erste Moduleinheit und die wenigstens eine zweite Moduleinheit unter Freigabe der bestimmten Betriebsposition bzw. des Transportabschnittes in jeweils horizontaler Richtung relativ zueinander bewegbar sind und hierbei in eine jeweilige durch das System ausgebildete Warteposition überführt werden, so dass die bestimmte Betriebsposition zwischen der wenigstens einen ersten Moduleinheit und der wenigstens einen zweiten Moduleinheit angeordnet ist bzw. so dass die wenigstens eine erste Moduleinheit und die wenigstens eine zweite Moduleinheit der bestimmten Betriebsposition auf gegenüberliegenden Seiten benachbart sind. Hierdurch kann es sein, dass wenigstens ein nachfolgend noch beschriebenes weiteres Modul zwischen die wenigstens eine erste Moduleinheit und die wenigstens eine zweite Moduleinheit in die bestimmte Betriebsposition eingebracht werden kann. Auch kann es sein, dass die wenigstens eine erste Moduleinheit und die wenigstens eine zweite Moduleinheit unter Freigabe der bestimmten Betriebsposition in jeweils vertikaler Richtung relativ zueinander bewegbar sind und hierbei in eine jeweilige durch das System ausgebildete Warteposition überführt werden. Bei solchen Ausführungsformen ist vorstellbar, dass das wenigstens eine weitere bzw. das wenigstens eine zweite Modul mittels einer horizontalen Bewegung in die bestimmte Betriebsposition gelangt bzw. mittels einer horizontalen Bewegung in die bestimmte Betriebsposition überführt und/oder gebracht wird.

Weiter ist denkbar, dass das System mindestens eine Linearführung umfasst, mit welcher die wenigstens eine erste Moduleinheit und die wenigstens eine zweite Moduleinheit für eine Relativbewegung in jeweils horizontaler Richtung mechanisch in Verbindung stehen. Weiter kann das System wenigstens einen Aktor umfassen, über welchen wenigstens einen Aktor die wenigstens eine erste Moduleinheit relativ gegenüber der wenigstens einen zweiten Moduleinheit in horizontaler Richtung entlang der mindestens einen Linearführung bewegbar ist. Der wenigstens eine Aktor kann über eine Steuer- und/oder Regeleinheit zur relativen Bewegung der wenigstens einen ersten Moduleinheit gegenüber der wenigstens einen zweiten Moduleinheit in horizontaler Richtung betätigt werden.

Bewährt haben sich zudem Ausführungsformen, bei welchen die wenigstens eine eine erste Moduleinheit und die wenigstens eine zweite Moduleinheit jeweils in lotrechter Richtung bewegbar sind. Wie erwähnt, kann es hierbei insbesondere sein, dass die wenigstens eine erste Moduleinheit und die wenigstens eine zweite Moduleinheit jeweils in vertikaler Richtung angehoben oder in vertikaler Richtung abgesenkt werden, woraufhin eine Überschubplatte auf die wenigstens eine erste Moduleinheit und die wenigstens eine zweite Moduleinheit aufgesetzt bzw. aufgelegt wird und die einzelnen Artikel oder Zusammenstellungen an Artikeln hierauf gleitend bzw. unter Oberflächenkontakt entlang der auf die wenigstens eine erste Moduleinheit und die wenigstens eine zweite Moduleinheit aufgesetzte bzw. aufgelegte Überschubplatte bewegt werden. Sofern zu einem späteren Zeitpunkt Laschen von Zuschnitten an Verpackungsmaterial durch die jeweilige Vielzahl an Faltfingern der wenigstens einen ersten Moduleinheit und der wenigstens einen zweiten Moduleinheit aufgerichtet werden sollen, kann vorgesehen sein, dass die Überschubplatte von der wenigstens einen ersten Moduleinheit und der wenigstens einen zweiten Moduleinheit abgenommen wird, die wenigstens eine erste Moduleinheit sowie die wenigstens eine zweite Moduleinheit jeweils in vertikaler Richtung angehoben oder in vertikaler Richtung abgesenkt werden und zeitlich hierauf folgend Laschen jeweiliger Zuschnitte an Verpackungsmaterial über die jeweilige Vielzahl an Faltfingern der wenigstens einen ersten Moduleinheit und der wenigstens einen zweiten Moduleinheit aufgerichtet werden. Denkbar ist darüber hinaus, dass vor dem Aufrichten der Laschen jeweiliger Zuschnitte an Verpackungsmaterial und nach der Abnahme der Überschubplatte die wenigstens eine erste Moduleinheit und die wenigstens eine zweite Moduleinheit jeweils eine horizontale Bewegung ausführen, bei welcher sich die wenigstens eine erste Moduleinheit und die wenigstens eine zweite Moduleinheit einander nähern.

Die wenigstens eine erste Moduleinheit und die wenigstens eine zweite Moduleinheit umfassen jeweils mindestens einen eigenen Antrieb, welcher mindestens eine eigene Antrieb der wenigstens einen ersten Moduleinheit zur Bewegung bzw. umlaufenden Bewegung der Vielzahl an Faltfingern der wenigstens einen ersten Moduleinheit ausgebildet ist und welcher mindestens eine eigene Antrieb der wenigstens einen zweiten Moduleinheit zur Bewegung bzw. umlaufenden Bewegung der Vielzahl an Faltfingern der wenigstens einen zweiten Moduleinheit ausgebildet ist. Der mindestens eine eigene Antrieb der wenigstens einen ersten Moduleinheit und der mindestens eine eigene Antrieb der wenigstens einen zweiten Moduleinheit sind derart ausgebildet, dass der mindestens eine eigene Antrieb der wenigstens einen ersten Moduleinheit und der mindestens eine eigene Antrieb der wenigstens einen zweiten Moduleinheit unabhängig voneinander betätigbar bzw. betreibbar sind. Insbesondere kann es sein, dass die wenigstens eine erste Moduleinheit und die wenigstens eine zweite Moduleinheit jeweils eine eigene Antriebseinheit umfassen, welche jeweilige eigene Antriebseinheit mindestens zwei eigene Antriebe umfasst. Über einen ersten Antrieb einer jeweiligen Antriebseinheit kann die vorherig bereits beschriebene erste Vielzahl an Faltfingern der jeweiligen wenigstens einen ersten bzw. wenigstens einen zweiten Moduleinheit ggf. umlaufend bewegt werden. Über einen zweiten Antrieb einer jeweiligen Antriebseinheit kann eine zweite Vielzahl an Faltfingern der jeweiligen wenigstens einen ersten bzw. wenigstens einen zweiten Moduleinheit ggf. umlaufend bewegt werden.

Es kann sein, dass die wenigstens eine erste Moduleinheit mit ihrem mindestens einen eigenen Antrieb und die wenigstens eine zweite Moduleinheit mit ihrem mindestens einen eigenen Antrieb zum Ausführen einer Relativbewegung ausgebildet sind, über welche Relativbewegung das System in den zweiten Betriebsmodus überführbar ist.

Auch kann das System ein Mittel oder mehrere Mittel zum Feststellen einer jeweiligen Ist-Position der Vielzahl an Faltfingern der wenigstens einen ersten Moduleinheit und der Vielzahl an Faltfingern der wenigstens einen zweiten Moduleinheit umfassen, wobei der mindestens eine eigene Antrieb der wenigstens einen ersten Moduleinheit und der mindestens eine eigene Antrieb der wenigstens einen zweiten Moduleinheit zur definierten Relativbewegung der Vielzahl an Faltfingern der wenigstens einen ersten Moduleinheit gegenüber der Vielzahl an Faltfingern der wenigstens einen zweiten Moduleinheit unter Berücksichtigung der jeweils festgestellten Ist-Position aufeinander abgestimmt ansteuerbar sind. Hierdurch kann eine Vielzahl an Faltfingern der wenigstens einen ersten Moduleinheit gegenüber einer Vielzahl an Faltfingern der wenigstens einen zweiten Moduleinheit ausgerichtet werden.

In einer Steuer- und/oder Regeleinheit können Informationen zu einem bestimmten Soll-Abstand der Vielzahl an Faltfingern der wenigstens einen ersten Moduleinheit gegenüber der Vielzahl an Faltfingern der wenigstens einen zweiten Moduleinheit hinterlegt sein. Die Steuer- und/oder Regeleinheit kann unter Berücksichtigung der Informationen zu dem bestimmten Soll-Abstand die eigenen Antriebe der wenigstens einen ersten Moduleinheit und der wenigstens einen zweiten Moduleinheit ggf. derart ansteuern, dass die jeweilige Vielzahl an Faltfingern der wenigstens einen ersten Moduleinheit gegenüber der jeweiligen Vielzahl an Faltfingern der wenigstens einen zweiten Moduleinheit den bestimmten Soll-Abstand einnehmen und ggf. während einer Bewegung der einzelnen Artikel oder Zusammenstellungen an Artikeln sowie der Bewegung der flächigen Zuschnitte an Verpackungsmaterial beibehalten.

Weiter kann das System mehrere Mittel zum Feststellen einer jeweiligen Ist-Position der Vielzahl an Faltfingern der wenigstens einen ersten Moduleinheit und der Vielzahl an Faltfingern der wenigstens einen zweiten Moduleinheit umfassen, welche mehreren Mittel wenigstens ein der jeweiligen Vielzahl an Faltfingern zugeordnete Lesegerät oder mindestens einen Sensor sowie wenigstens einen der jeweiligen Vielzahl an Faltfingern zugeordneten Lagegeber umfassen. So ist es bspw. denkbar, dass die mehreren Mittel zum Feststellen einer jeweiligen Ist-Position der Vielzahl an Faltfingern der wenigstens einen ersten Moduleinheit und der Vielzahl an Faltfingern der wenigstens einen zweiten Moduleinheit mehrere Reedschalter umfassen. Eine besonders einfach und kostengünstig realisierbare Variante eines solchen Lageerfassungssystems, das zudem sehr exakt arbeitet, kann bspw. vorsehen, dass den Faltfingern oder einzelnen Faltfingern bzw. dem Antriebssystem mit den Faltfingern Permanentmagneten zugeordnet sein können, die mit fest installierten Reedschaltern zusammenwirken, die durch die daran in geringen Abständen vorbeibewegten Permanentmagneten geschaltet und dadurch sehr exakte Lageinformationen liefern können.

Für diverse Ausführungsformen ist denkbar, dass das System eine Vielzahl an umlaufend geführten Transportelementen zur Bewegung der jeweiligen einzelnen Artikel oder Zusammenstellungen an Artikeln umfasst. Es kann hierbei sein, dass die einzelnen Artikel oder Zusammenstellungen an Artikeln im zweiten Betriebsmodus des Systems über die Vielzahl an umlaufend geführten Transportelementen unter rückseitiger Anlage an der Vielzahl an umlaufend geführten Transportelementen bewegbar sind.

Es ist denkbar, dass das wenigstens eine weitere Modul und/oder die ggf. als Bestandteil des Systems ausgebildete Überschublatte eine horizontale Transportfläche für die einzelnen Artikel oder Zusammenstellungen an Artikeln umfassen. Weiter können die einzelnen Artikel oder Zusammenstellungen an Artikeln im zweiten Betriebsmodus ggf. unter jeweiliger rückseitiger Anlage mittels der Vielzahl an umlaufend geführten Transportelementen gleitend über die horizontale Transportfläche des wenigstens einen weiteren Moduls und/oder der als Bestandteil des Systems ausgebildeten Überschubplatte bewegt werden.

Vorstellbar ist auch, dass das wenigstens eine weitere Modul ein Transportband und einen eigenen Antrieb umfasst, wobei das Transportband des wenigstens einen weiteren Moduls im zweiten Betriebsmodus über den eigenen Antrieb zum Fördern der einzelnen Artikel oder Zusammenstellungen an Artikeln umlaufend bewegt werden kann.

Auch kann es sein, dass das wenigstens eine weitere Modul bzw. das zweite Modul zum Einbringen in die bestimmte Betriebsposition in vertikaler Richtung angehoben und/oder in vertikaler Richtung abgesenkt werden. Das Anheben und/oder Absenken des wenigstens einen weiteren Moduls in die bestimmte Betriebsposition kann über mindestens einen Aktor erfolgen, welcher zum Anheben und/oder Absenken des wenigstens einen weiteren Moduls an eine Steuer- und/oder Regeleinheit gekoppelt ist.

Die Erfindung betrifft zudem eine Verpackungsstrecke gemäß Anspruch 9 für einzelne Artikel oder Zusammenstellungen an Artikeln. Die einzelnen Artikel können für die Verpackungsstrecke weiterhin durch Getränkebehältnisse ausgebildet sein. Auch die Zusammenstellungen an Artikeln können für die Verpackungsstrecke durch Zusammenstellungen an Getränkebehältnissen ausgebildet sein. Die Verpackungsstrecke umfasst einen Zulauf für die einzelnen Artikel oder Zusammenstellungen an Artikeln. Der Zulauf kann mindestens eine Horizontalfördereinrichtung umfassen, mittels welcher mindestens einen Horizontalfördereinrichtung die einzelnen Artikel oder Zusammenstellungen an Artikeln entlang der Verpackungsstrecke bzw. entlang eines Abschnittes der Verpackungsstrecke bewegbar sind.

Weiter umfasst die Verpackungsstrecke einen an den Zulauf bzw. an die mindestens eine Horizontalfördereinrichtung des Zulaufs anschließenden und durch ein System gemäß einem Ausführungsbeispiel der vorherigen Beschreibung ausgebildeten Transportabschnitt für die einzelnen Artikel oder Zusammenstellungen an Artikeln. Zwischen der mindestens einen Horizontalfördereinrichtung des Zulaufs und dem Transportabschnitt kann ein Spalt ausgebildet sein, über welchen flächige Zuschnitte an Verpackungsmaterial, die zum Aufrichten vorgesehene Laschen besitzen, in einen sich entlang der Verpackungsstrecke erstreckenden Transportweg der einzelnen Artikel oder Zusammenstellungen an Artikeln eingebracht werden können.

Bestandteil der Verpackungsstrecke ist zudem mindestens eine Horizontalfördereinrichtung für Artikel oder Zusammenstellungen an Artikeln, welche mindestens eine Horizontalfördereinrichtung auf den Transportabschnitt folgt. Auch zwischen dieser mindestens einen Horizontalfördereinrichtung und dem Transportabschnitt kann ein weiterer Spalt ausgebildet sein, über welchen weitere flächige Zuschnitte an Verpackungsmaterial, die ggf. keine zum Aufrichten vorgesehene Lasche besitzen, in einen sich entlang der Verpackungsstrecke erstreckenden Transportweg der einzelnen Artikel oder Zusammenstellungen an Artikeln eingebracht werden können.

Bestandteil der Verpackungsstrecke ist zudem eine Einrichtung, über welche wahlweise und in Abhängigkeit des jeweiligen durch das System ausgebildeten ersten oder zweiten Betriebsmoduls flächige Zuschnitte an Verpackungsmaterial in Bewegungsrichtung der einzelnen Artikel oder Zusammenstellungen an Artikeln vor oder nach dem Transportabschnitt in einen entlang der Verpackungsstrecke für die einzelnen Artikel oder Zusammenstellungen an Artikeln ausgebildeten Transportweg eingebracht werden können.

Hierbei kann es sein, dass die flächigen Zuschnitte an Verpackungsmaterial über den vorherig bereits beschriebenen Spalt bzw. weiteren Spalt in den Transportweg der einzelnen Artikel oder Zusammenstellungen an Artikeln eingebracht werden. Sofern das mindestens eine Modul in die bestimmte Betriebsposition eingebracht ist bzw. sofern das System den ersten Betriebsmodus ausbildet, können flächige Zuschnitte an Verpackungsmaterial, die ggf. zum Aufrichten vorgesehene Laschen besitzen bzw. als Tray ausgebildet sind, über den zwischen dem Zulauf bzw. der mindestens einen Horizontalfördereinrichtung des Zulaufs und dem mindestens einen ersten Modus ausgebildeten Spalt in den Transportweg der einzelnen Artikel oder Zusammenstellungen an Artikeln eingebracht werden.

Sofern das wenigstens eine weitere Modul in die bestimmte Betriebsposition eingebracht ist und/oder die Überschubplatte auf das mindestens eine erste Modul aufgesetzt ist bzw. sofern sich das System im zweiten Betriebsmodus befindet, können flächige Zuschnitte an Verpackungsmaterial, die ggf. keine zum Aufrichten vorgesehene Laschen besitzen, über den zwischen dem wenigstens einen zweiten Modul bzw. der Überschubplatte dem an den Transportabschnitt bzw. an das wenigstens eine zweite Modul anschließenden mindestens einen Horizontalfördereinrichtung ausgebildeten Spalt in den Transportweg der einzelnen Artikel oder Zusammenstellungen an Artikeln eingebracht werden.

Die Erfindung betrifft darüber hinaus ein Verfahren gemäß Anspruch 10 zum Modifizieren einer für Artikel oder Zusammenstellungen an Artikeln vorgesehenen Verpackungsstrecke. Merkmale, welche vorhergehende bereits zu diversen Ausführungsformen der Vorrichtung bzw. der Verpackungsstrecke genannt wurden können ebenso für das nachfolgend beschriebene Verfahren vorgesehen sein und werden daher nicht redundant erwähnt. Weiter können nachfolgend beschriebene Merkmale, welche diverse Ausführungsformen des Verfahrens betreffen, bei vorherig bereits beschriebener Vorrichtung bzw. bei vorherig bereits beschriebener Verpackungsstrecke vorgesehen sein.

Ein erster Schritt des Verfahrens sieht ein Transportieren von Artikeln oder Zusammenstellungen an Artikeln über mindestens ein Modul in einem ersten Betriebsmodus der Verpackungsstreckt vor, welches mindestens eine Modul mindestens zwei einzelne im ersten Betriebsmodus zusammenarbeitende Moduleinheiten besitzt, auf einen Transport für eine erste Verpackungsart vorgesehener einzelner Artikel oder Zusammenstellungen an Artikeln ausgerichtet ist und im ersten Betriebsmoduls einen Transportabschnitt der Verpackungsstrecke ausbildet.

Weiter sieht das erfindungsgemäße Verfahren ein jeweiliges Bewegung der mindestens zwei einzelnen Moduleinheiten vor, woraus resultierend der Transportabschnitt für einen zweiten Betriebsmodus der Verpackungsstrecke angepasst wird, welcher zweite Betriebsmodus zum Transport von einzelnen Artikeln oder Zusammenstellungen an Artikeln ausgerichtet ist, die für eine zweite sich von der ersten Verpackungsart unterscheidende Verpackungsart vorgesehen sind.

Die wenigstens eine erste Moduleinheit und wenigstens eine zweite Moduleinheit des mindestens einen ersten Moduls bilden jeweils eine Vielzahl an vorzugsweise umlaufend geführten Faltfingern aus, wobei die Vielzahl an vorzugsweise umlaufend geführten Faltfingern der wenigstens einen ersten Moduleinheit und die Vielzahl an vorzugsweise umlaufend geführten Faltfingern der wenigstens einen zweiten Moduleinheit im ersten Betriebsmodus Laschen von mit den einzelnen Artikeln oder Zusammenstellungen an Artikeln in Verbindung stehenden Zuschnitten an Verpackungsmaterial aufrichten. Das mindestens eine erste Modul kann sich zeitlich während des Aufrichtens der Laschen von mit einzelnen Artikeln oder Zusammenstellungen an Artikeln in Verbindung stehenden Zuschnitten an Verpackungsmaterial im Transportabschnitt bzw. der vorherig bereits erwähnten bestimmten Betriebsposition befinden.

Die Vielzahl an Faltfingern der wenigstens einen ersten Moduleinheit kann mit mindestens einer Kette in Verbindung stehen, welche zur umlaufenden Bewegung der Vielzahl an Faltfingern der wenigstens einen ersten Moduleinheit umlaufend angetrieben wird. Ebenso kann die Vielzahl an Faltfingern der wenigstens einen zweiten Moduleinheit mit mindestens einer weiteren Kette in Verbindung stehen, welche zur umlaufenden Bewegung der Vielzahl an Faltfingern der wenigstens einen zweiten Moduleinheit umlaufend angetrieben wird.

Denkbar ist, dass die zwei einzelnen Moduleinheiten zum Anpassen des Transportabschnittes für den zweiten Betriebsmodus jeweils in Richtung nach unten bewegt werden. Weiter kann zeitlich nach der jeweiligen Bewegung in Richtung nach unten eine Überschubplatte auf die zwei einzelnen Moduleinheiten aufgesetzt werden. Einzelne Artikel oder Zusammenstellungen an Artikeln, die für die zweite Verpackungsart vorgesehen sind, können vorzugsweise im zweiten Betriebsmodus gleitend entlang der auf die mindestens zwei einzelnen Moduleinheiten aufgesetzten Überschubplatte bewegt werden.

Es kann sein, dass die mindestens zwei einzelnen Moduleinheiten jeweils in horizontaler Richtung relativ zueinander bewegt werden und hierbei zwischen sich den Transportabschnitt zum Einbringen des wenigstens einen zweiten Moduls freigeben.

Auch kann es sein, dass die mindestens zwei einzelnen Moduleinheiten relativ zueinander bewegt werden, wobei die mindestens zwei einzelnen Moduleinheiten den Transportabschnitt verlassen und worauf zeitlich folgend wenigstens ein weiteres Modul in den Transportabschnitt eingebracht wird. Das wenigstens eine weitere Modul kann im Transportabschnitt der Verpackungsstrecke einzelne Artikel oder Zusammenstellungen an Artikeln, die für die zweite Verpackungsart vorgesehen sind, entlang des Transportabschnittes bewegen.

Weiter kann es sein, dass die mindestens zwei Moduleinheiten mittels der jeweiligen Relativbewegung in Richtung auf gegenüberliegenden Seiten des Transportabschnittes angeordnete Wartepositionen überführt werden, worauf das wenigstens eine zweite Modul in den Transportabschnitt eingebracht wird. Die mindestens zwei Moduleinheiten können während des Einbringens des wenigstens einen zweiten Moduls in den Transportabschnitt und/oder während eines Transportes für eine zweite Verpackungsart vorgesehener einzelner Artikel oder Zusammenstellungen an Artikeln durch das wenigstens eine zweite in den Transportabschnitt eingebrachte Modul in ihrer jeweiligen Warteposition verbleiben. Somit können die wenigstens zwei Moduleinheiten zeitlich während des zweiten Betriebsmodus in ihrer jeweiligen Warteposition verbleiben.

Weiter kann es sein, dass die mindestens zwei Moduleinheiten unter mechanischer Koppelung an eine Linearführung jeweils in horizontaler Richtung und relativ zueinander bewegt werden.

Die Vielzahl an Faltfingern der wenigstens einen ersten Moduleinheit und die Vielzahl an Faltfingern der wenigstens einen zweiten Moduleinheit werden zeitlich vor Freigabe des Transportabschnittes über einen jeweiligen eigenen Antrieb umlaufend bewegt. Es kann zudem sein, dass der eigene Antrieb der wenigstens einen ersten Moduleinheit und der eigene Antrieb der wenigstens einen zweiten Moduleinheit zusammen mit der jeweiligen Moduleinheit relativ zueinander bewegt werden, woraus resultierend das mindestens eine erste Modul aus dem Transportabschnitt entnommen wird und der Transportabschnitt zum Einbringen des wenigstens einen zweiten Moduls freigegeben wird und/oder womit der Transportabschnitt für den zweiten Betriebsmodus der Verpackungsstrecke angepasst wird..

Eine jeweilige Ist-Position einzelner umlaufend bewegter Faltfinger der Vielzahl der wenigstens einen ersten Moduleinheit und eine jeweilige Ist-Position einzelner umlaufend bewegter Faltfinger der Vielzahl der wenigstens einen zweiten Moduleinheit wird festgestellt und/oder ermittelt. Weiter werden die eigenen Antriebe der wenigstens einen ersten Moduleinheit und der wenigstens einen zweiten Moduleinheit unter Berücksichtigung der erfassten Ist-Positionen zum definierten Ausrichten der Vielzahl an einzelnen Faltfingern der wenigstens einen ersten Moduleinheit gegenüber der Vielzahl an Faltfingern der wenigstens einen zweiten Moduleinheit angesteuert.

In diesem Zusammenhang kann bspw. vorgesehen sein, dass die jeweilige Ist-Position mittels mindestens eines Lesegeräts oder geeigneten Sensors und mindestens eines geeigneten Lagegebers festgestellt und/oder ermittelt wird, wobei das mindestens eine Lesegerät oder der mindestens eine Sensor und der mindestens eine Lagegeber bspw. durch mindestens ein System, gebildet aus Permanentmagneten als Lagegeber und mindestens einen Reedschalter als Sensor oder Leser, ausgebildet ist bzw. sein kann. Die wenigstens eine erste Moduleinheit und/oder die wenigstens eine zweite Moduleinheit können jeweils eine erste Vielzahl an umlaufend bewegten Faltfingern umfassen und eine zweite Vielzahl an umlaufend bewegten Faltfingern umfassen. Die jeweilige erste Vielzahl an umlaufend bewegten Faltfingern und die jeweilige zweite Vielzahl an umlaufend bewegten Faltfingern können parallel zueinander geführt sein. Denkbar ist hierbei, dass eine jeweilige Ist-Position einzelner Faltfinger der ersten Vielzahl an umlaufend bewegten Faltfingern sowie eine jeweilige Ist-Position einzelner Faltfinger der zweiten Vielzahl an umlaufend bewegten Faltfingern erfasst und/oder ermittelt wird. Die jeweilige erste Vielzahl an umlaufend bewegten Faltfingern kann sodann gegenüber der jeweiligen zweiten Vielzahl an umlaufend bewegten Faltfingern in eine definierte Ausrichtung bzw. definierte relative Beabstandung gebracht werden. Hierzu kann die wenigstens eine erste Moduleinheit und/oder die wenigstens eine zweite Moduleinheit über eine jeweilige Antriebseinheit verfügen, welche jeweilige Antriebseinheit jeweils mindestens zwei Antriebe zur unabhängigen umlaufenden Bewegung der ersten Vielzahl an Faltfingern gegenüber der zweiten Vielzahl an Faltfingern umfasst. Die erste Vielzahl an Faltfingern der wenigstens einen ersten bzw. wenigstens einen zweiten Moduleinheit kann zum Aufrichten vorderer bzw. vorauseilender Laschen flächiger Zuschnitte an Verpackungsmaterial ausgebildet sein. Zudem kann die zweite Vielzahl an Faltfingern der wenigstens einen ersten bzw. wenigstens einen zweiten Moduleinheit zum Aufrichten hinterer bzw. nacheilender Laschen flächiger Zuschnitte an Verpackungsmaterial ausgebildet sein.

Darüber hinaus ist denkbar, dass in den Transportabschnitt nach Freigabe des Transportabschnittes das wenigstens eine zweite Modul eingebracht wird, worauf zeitlich folgend bei in dem Transportabschnitt eingebrachtem wenigstens einen zweiten Modul eine Vielzahl an umlaufend geführten Transportelementen einzelne Artikel oder Zusammenstellungen an Artikeln unter jeweiliger vorzugsweise rückseitiger Anlage über eine als Bestandteil des wenigstens einen zweiten in den Transportabschnitt eingebrachten Moduls ausgebildete horizontale Transportfläche gleitend bewegt werden.

Zudem kann es sein, dass in den Transportabschnitt nach Freigabe des Transportabschnittes das wenigstens eine zweite Modul eingebracht wird, worauf folgend die einzelnen Artikel oder Zusammenstellungen an Artikeln auf einem umlaufend angetriebenen Transportband des wenigstens einen zweiten in den Transportabschnitt eingebrachten Moduls aufstehend bewegt werden.

Auch ist vorstellbar, dass in den Transportabschnitt nach Freigabe des Transportabschnittes das wenigstens eine zweite Modul mittels einer in vertikaler Richtung orientierten Hebebewegung oder einer in vertikaler Richtung orientierten Senkbewegung in den Transportabschnitt eingebracht wird.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Fig. 1 zeigt eine schematische Ansicht einer ersten Ausführungsform eines erfindungsgemäßen Systems.
Fig. 2 zeigt eine schematische Ansicht der Ausführungsform aus Fig. 1 unter Verdeutlichung weiterer Aspekte.
Fig. 3 zeigt eine schematische Ansicht der Ausführungsform des Systems aus den Figuren 1 und 2, wobei das zweite Modul in die Betriebsposition bzw. den Transportabschnitt eingebracht wurde.
Fig. 4 zeigt eine schematische Ansicht einer weiteren Ausführungsform des erfindungsgemäßen Systems.
Fig. 5 zeigt eine schematische Schnittdarstellung durch die Ausführungsform des Systems aus Fig. 4.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die Erfindung ausgestaltet sein kann und stellen keine abschließende Begrenzung dar. Die Merkmale der nachfolgend dargestellten Ausführungsbeispiele sind jeweils im allgemeinen Zusammenhang zu verstehen und nicht eng mit dem jeweiligen Ausführungsbeispiel verknüpft.

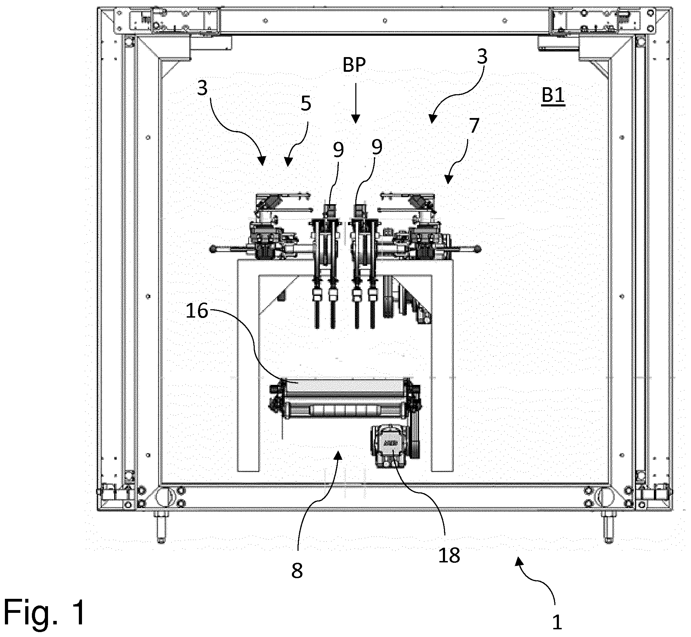

Die schematische Ansicht der Fig. 1 zeigt eine erste Ausführungsform eines erfindungsgemäßen Systems 1. Das System 1 ist vorgesehen zum Ausbilden eines Transportabschnittes für eine Verpackungsstrecke. Hierzu umfasst das System 1 ein erstes Modul 3 und ein zweites Modul 8, wobei das erste Modul 3 und das zweite Modul 8 wahlweise in den Transportabschnitt bzw. in eine entlang des Transportabschnittes ausgebildete bestimmte Betriebsposition BP eingebracht werden können. In Fig. 1 ist das zweite Modul 8 in einer Warteposition unterhalb einer zum Transport der einzelnen Artikel oder Zusammenstellungen an Artikeln mittels der durch das in die Betriebsposition BP eingebrachte erste Modul 3 ausgebildeten Transportebene angeordnet.

Die einzelnen Artikel bzw. Zusammenstellungen an Artikeln, welche das System 1 bewegen bzw. handhaben kann, können durch Getränkebehältnisse und insbesondere durch Gruppierungen aus mehreren zu einem jeweiligen Gebinde zusammenzufassende Getränkebehältnisse ausgebildet sein. Aus Gründen der Übersichtlichkeit sind die einzelnen Artikel bzw. Zusammenstellungen an Artikeln in den Figuren vorliegender Patentanmeldung nicht mit dargestellt. Über das System 1 können die einzelnen Artikel oder Zusammenstellungen an Artikeln in Richtung der Bildebene bewegt werden.

Das zweite Modul 8, welches sich in Fig. 1 in der Warteposition befindet bzw. unterhalb des ersten in die bestimmte Betriebsposition BP eingebrachten ersten Moduls 3 angeordnet ist, ist zum Transport einzelner Artikel oder Zusammenstellungen an Artikeln vorgesehen, welche auf einen als PAD ausgebildeten Zuschnitt an Verpackungsmaterial aufgesetzt werden sollen. Hierzu wird das zweite Modul 8, wie nachfolgend noch beschrieben, in die bestimmte Betriebsposition BP eingebracht, woraufhin die einzelnen Artikel oder Zusammenstellungen an Artikeln mittels eines als Bestandteil des zweiten Moduls 8 ausgebildeten Transportbandes 16 entlang des zweiten Moduls 8 bewegt werden und zumindest näherungsweise unmittelbar bei Verlassen des zweiten Moduls 8 auf einen jeweiligen als PAD ausgebildeten Zuschnitt an Verpackungsmaterial auffahren.

Ein jeweiliges PAD kann eine horizontale Standfläche für einen jeweiligen einzelnen Artikel oder eine jeweilige Zusammenstellungen an Artikeln ausbilden und besitzt in der Praxis keine Laschen, die zur seitlichen Anlage an einem jeweiligen einzelnen Artikel bzw. einer jeweiligen Zusammenstellung an Artikeln in eine aufrechte Orientierung überführt werden können. An das Transportband 16 des ggf. in die bestimmte Betriebsposition BP eingebrachten zweiten Moduls 8 kann hierbei unter Ausbildung eines Spalts eine Horizontalfördereinrichtung anschließen. Die als PAD ausgebildeten Zuschnitte an Verpackungsmaterial können über den zwischen dem Transportband 16 und der Horizontalfördereinrichtung ausgebildeten Spalt in einen Transportweg der einzelnen Artikel oder Zusammenstellungen an Artikeln eingebracht werden.

Wie vorhergehend bereits erwähnt, befindet sich das zweite Modul 8 in Fig. 1 in einer Warteposition, wohingegen das erste Modul 3 in die bestimmte Betriebsposition BP eingebracht wurde und in der Betriebsposition BP einzelne Artikel oder Zusammenstellungen an Artikeln in Richtung der Bildebene bewegen kann. Das erste Modul 3 ist auf einen Transport für einzelne Artikel oder Zusammenstellungen an Artikeln ausgerichtet, welche bereits während des Transportes über das erste in die bestimmte Betriebsposition BP eingebrachte Modul 3 auf einem jeweiligen als Tray ausgebildeten Zuschnitt an flächigem Verpackungsmaterial aufstehen. Weiter umfasst das erste Modul 3 eine erste Moduleinheit 5 und eine zweite Moduleinheit 7, welche in der bestimmten Betriebsposition BP zum Transportieren der einzelnen auf einem jeweiligen Tray aufstehenden Artikel oder der auf einem jeweiligen Tray aufstehenden Zusammenstellungen an Artikeln miteinander in Verbindung stehen bzw. miteinander zusammenwirken.

Sowohl die erste Moduleinheit 5 als auch die zweite Moduleinheit 7 umfassen hierzu jeweils eine Vielzahl an umlaufend geführten Faltfingern 9, mittels welchen vordere Laschen und hintere Laschen eines jeweiligen Trays während einer Bewegung der auf diesem jeweiligen Tray aufstehenden einzelnen Artikel oder Zusammenstellungen an Artikeln aufgerichtet werden können. Das erste Modul 3 ist daher auf einzelne Artikel oder Zusammenstellungen an Artikeln ausgerichtet, auf welche durch ein jeweiliges Tray ausgebildete Zuschnitte an Verpackungsmaterial aufgebracht werden sollen. Sofern sich das erste Modul 3, wie in Fig. 1 gezeigt, in der bestimmten Betriebsposition BP befindet, ist das System 1 in einen ersten Betriebsmodus B1 gebracht, in welchem das System 1 einzelne Artikel oder Zusammenstellungen an Artikeln in Richtung der Bildebene transportieren und Laschen von Zuschnitten an Verpackungsmaterial aufrichten kann.

Weiterhin ist das zweite Modul 8 auf einzelne Artikel oder Zusammenstellungen an Artikeln ausgerichtet, welche auf einen jeweiligen als PAD ausgebildeten Zuschnitt an Verpackungsmaterial ohne aufzurichtende vordere und hintere Laschen aufgesetzt werden sollen. Somit ist das erste Modul 3 auf einen Transport für eine erste Verpackungsart vorgesehener einzelner Artikel oder Zusammenstellungen an Artikeln ausgerichtet, wohingegen das zweite Modul 8 auf einen Transport für eine zweite Verpackungsart vorgesehener einzelner Artikel oder Zusammenstellungen an Artikeln ausgerichtet ist, welche zweite Verpackungsart sich von der ersten Verpackungsart unterscheidet.

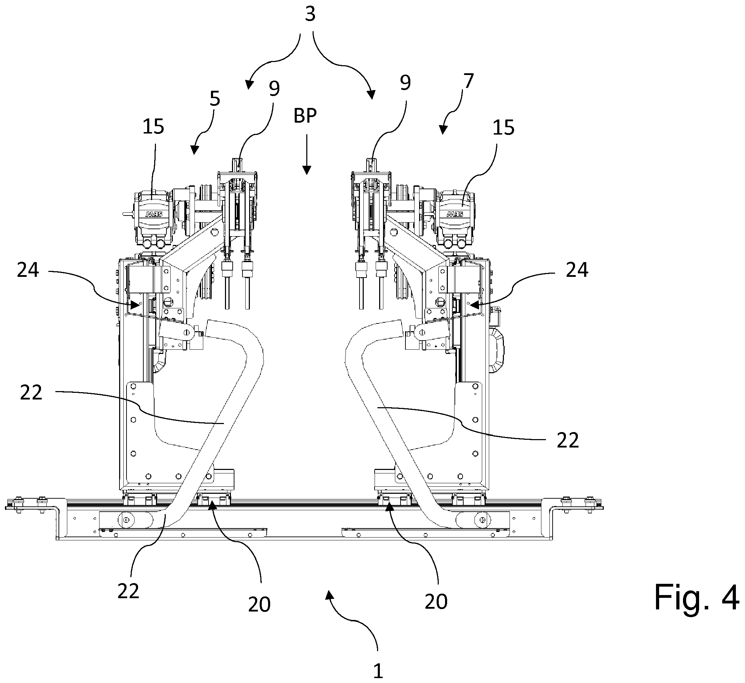

Die Fig. 1 lässt zudem erkennen, dass die erste Moduleinheit 5 und die zweite Moduleinheit 7 des in der bestimmten Betriebsposition BP bzw. im Transportabschnitt der Verpackungsstrecke befindlichen ersten Moduls 3 eine definierte Relativposition zueinander eingenommen haben, bei welcher definierten Relativposition die erste Moduleinheit 5 mit der zweiten Moduleinheit 7 zusammenarbeitet, wobei die erste Moduleinheit 5 und die zweite Moduleinheit 7 hierbei einzelne Artikel oder Zusammenstellungen an Artikeln bewegen und die vorderen und hinteren Laschen eines jeweiligen Zuschnittes an Verpackungsmaterials während der Bewegung der auf diesem jeweiligen Zuschnitte aufstehenden einzelnen Artikel oder Zusammenstellungen an Artikeln aufrichten. Die erste Moduleinheit 5 und die zweite Moduleinheit 7 sind hierbei im dargestellten ersten Betriebsmodus B1 in der Ausführungsform aus Fig. 1 mechanisch nicht aneinander gekoppelt. Weiter umfassen die erste Moduleinheit 5 und die zweite Moduleinheit 7 jeweils ein Paar an eigenen Antrieben 15, welches jeweilige Paar an eigenen Antrieben 15 zur umlaufenden Bewegung der als Bestandteil der jeweiligen ersten Moduleinheit 5 bzw. zweiten Moduleinheit 7 ausgebildeten Faltfinger 9 vorgesehen sind und jeweils eine Antriebseinheit 32 bilden (vgl. Fig. 4).

Bestandteil des Systems 1 können zudem mehrere Lagegeber sein, welche mechanisch an mindestens einem Faltfinger 9 einer jeweils in einer Reihe umlaufend bewegten Vielzahl der ersten Moduleinheit 5 und der zweiten Moduleinheit 7 jeweils festgesetzt sein können. Die Lagegeber können in einer einfachen Bauform bspw. jeweils als Permanentmagneten ausgebildet sein. Zudem umfasst das System 1 ein nicht mit dargestelltes Lesegerät oder einen geeigneten Sensor, welches/welcher die Lagegeber bzw. Permanentmagneten bei umlaufender Bewegung der jeweiligen Vielzahl an Faltfingern 9 passieren. Als Lesegerät oder Sensor kommt in einer einfachen Bauform bspw. ein Reedschalter in Frage, der von den Permanentmagneten aktiviert und dadurch sehr exakte Lageinformationen durch ein einfaches Schaltsignal liefern kann. Das Lesegerät oder der Sensor steht mit einer Steuer- und/oder Regeleinheit in Verbindung, welche über das Lesegerät oder den Sensor bei Erkennen eines Lagegebers bzw. eines Permanentmagneten die jeweilige Ist-Position der einzelnen Faltfinger 9 einer jeweils in einer Reihe umlaufend bewegten Vielzahl feststellen bzw. erkennen kann. In Abhängigkeit der über die Steuer- und/oder Regeleinheit erkannten Ist-Positionen werden sodann die Antriebseinheiten 32 der ersten Moduleinheit 5 und der zweiten Moduleinheit 7 angesteuert, um die Faltfinger 9 der ersten Moduleinheit 5 gegenüber den Faltfingern 7 der zweiten Moduleinheit 7 in eine geeignete Relativposition zu überführen, um vordere und hintere Laschen eines jeweiligen Zuschnitts an Verpackungsmaterial über Faltfinger 9 der ersten Moduleinheit 5 und Faltfinger 9 der zweiten Moduleinheit 7 aufzurichten. Die jeweilige Relativpositionen behalten die jeweiligen Faltfinger 9 der ersten Moduleinheit 5 und die jeweiligen Faltfinger 9 der zweiten Moduleinheit 7 während eines Oberflächenkontaktes mit Laschen eines jeweiligen Zuschnittes an Verpackungsmaterial und während einer Bewegung dieses jeweiligen Zuschnittes an Verpackungsmaterial sowie der auf diesem Zuschnitt an Verpackungsmaterial aufstehenden einzelnen Artikel oder Zusammenstellungen an Artikeln bei.

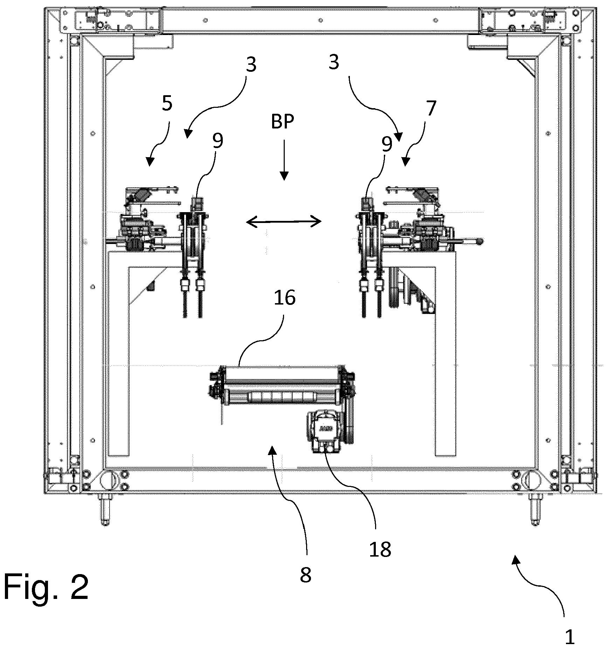

Die schematische Ansicht der Fig. 2 zeigt die Ausführungsform eines Systems 1 aus Fig. 1 unter Verdeutlichung weiterer Aspekte. In Fig. 2 ist weiterhin das erste Modul 3 mit der ersten Moduleinheit 5 und der zweiten Moduleinheit 7 dargestellt. Zudem ist das zweite Modul 8 zu erkennen, welches gegenüber seiner Position aus Fig. 1 unverändert ist bzw. welches sich in der bereits zu Fig. 1 beschriebenen Warteposition befindet, die sich gegenüber dem ersten Modul 3 auf geringerem vertikalen Höhenniveau befindet.

Wie in Fig. 2 mittels Pfeildarstellung angedeutet, wurden die erste Moduleinheit 5 und die zweite Moduleinheit 7 relativ zueinander bewegt und hierbei jeweils in horizontaler Richtung verfahren, woraus resultierende der ehemals vom ersten Modul 3 eingenommene Transportabschnitt bzw. die ehemals vom ersten Modul 3 eingenommene bestimmte Betriebsposition BP zum Einbringen des zweiten Moduls 8 freigegeben wird. Die erste Moduleinheit 5 und die zweite Moduleinheit 7 werden im Rahmen der Relativbewegung horizontal zueinander verfahren jedoch nicht in vertikaler Richtung angehoben oder abgesenkt. Sowohl die erste Moduleinheit 5 als auch die zweite Moduleinheit 7 werden hierbei jeweils seitlich in Richtung weg der bestimmten Betriebsposition BP bewegt, so dass die erste Moduleinheit 5 und die zweite Moduleinheit 7 den Transportabschnitt bzw. die bestimmte Betriebsposition BP jeweils verlassen. Nach der Relativbewegung der ersten Moduleinheit 5 und der zweiten Moduleinheit 7 zueinander sind die erste Moduleinheit 5 und die zweite Moduleinheit 7 der bestimmten Betriebsposition BP bzw. dem Transportabschnitt auf gegenüberliegenden Seiten benachbart. Die Relativbewegung der ersten Moduleinheit 5 und der zweiten Moduleinheit 7 zueinander kann ggf. aktorisch und auf Veranlassung einer Steuer- und/oder Regeleinheit bewirkt werden.

Die zuvor erwähnte und als Bestandteil der ersten Moduleinheit 5 bzw. der zweiten Moduleinheit 7 ausgebildete und zur umlaufenden Bewegung der Faltfinger 9 vorgesehene Antriebseinheit 32 wird zusammen mit der ersten Moduleinheit 5 bzw. der zweiten Moduleinheit 7 aus der bestimmten Betriebsposition BP genommen. Sofern die erste Moduleinheit 5 und die zweite Moduleinheit 7 erneut in die bestimmte Betriebsposition BP eingebracht werden sollen, kann die als Bestandteil der ersten Moduleinheit 5 bzw. der zweiten Moduleinheit 7 ausgebildete und zur umlaufenden Bewegung der jeweiligen Vielzahl an Faltfinger 9 vorgesehene jeweilige Antriebseinheit 32 zusammen mit der jeweiligen ersten Moduleinheit 5 bzw. zweiten Moduleinheit 7 erneut in die bestimmte Betriebsposition BP überführt werden. Hierdurch ist keine umständliche mechanische Koppelung zwischen einem Aktor und der ersten und zweiten Moduleinheit 5 bzw. 7 nach Einbringen in die bestimmte Betriebsposition BP erforderlich, so dass das erste Modul 3 nach Entnahme bzw. nach Freigabe der Betriebsposition BP zeitoptimiert und einfach erneut in die bestimmte Betriebsposition BP eingebracht werden kann.

Ebenso umfasst das zweite Modul 8 einen eigenen Aktor 18, welcher zum Antrieb des als Bestandteil des zweiten Moduls 8 ausgebildeten Transportbandes 16 vorgesehen ist. Der eigene Aktor 18 des zweiten Moduls 8 ist fester Bestandteil des zweiten Moduls 8 und kann somit zusammen mit dem zweiten Modul 8 in die bestimmte Betriebsposition BP eingebracht und aus der bestimmten Betriebsposition BP entnommen werden. Auch im Hinblick auf das zweite Modul 8 ist es daher nicht notwendig, nach Überführen bzw. Einbringen des zweiten Moduls 8 in die bestimmte Betriebsposition BP eine mechanische Koppelung zum Antrieb des Transportbandes 16 auszubilden. Ein Einbringen des zweiten Moduls 8 in die bestimmte Betriebsposition BP bzw. in den Transportabschnitt kann daher einfach und mit geringem Zeitaufwand erfolgen.

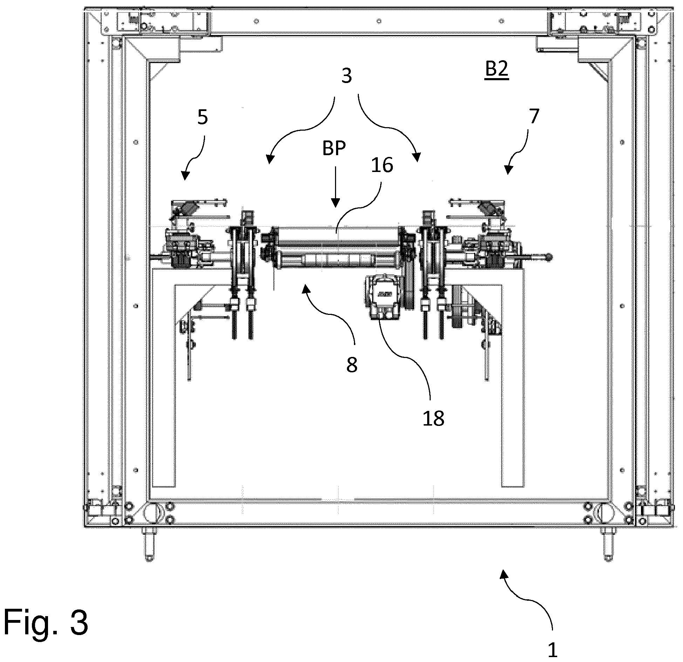

Die Fig. 3 zeigt eine schematische Ansicht der Ausführungsform des Systems 1 aus den Figuren 1 und 2, wobei das zweite Modul 8 in die bestimmte Betriebsposition BP bzw. den Transportabschnitt eingebracht wurde und wobei das System 1 sich in einem zweiten Betriebsmodus B2 befindet. Eine Zusammenschau der Figuren 2 und 3 zeigt hierbei, dass die erste Moduleinheit 5 und die zweite Moduleinheit 7 nach Freigabe des Transportabschnittes bzw. der bestimmten Betriebsposition BP in einer jeweiligen seitlich des Transportabschnittes bzw. der bestimmten Betriebsposition BP ausgebildeten Warteposition angeordnet bleiben. Weiter verdeutlicht eine Zusammenschau der Figuren 2 und 3, dass das zweite Modul 8 zusammen mit dem als Bestandteil des zweiten Moduls 8 ausgebildeten Transportband 16 ohne horizontale Bewegung in vertikaler Richtung angehoben wird und hierdurch in die bestimmte Betriebsposition BP bzw. in den Transportabschnitt gelangt. Für weitere Ausführungsformen ist ebenso denkbar, dass das zweite Modul 8 ohne horizontale Bewegung in vertikaler Richtung abgesenkt wird und hierdurch in die bestimmte Betriebsposition BP gelangt. Eine Warteposition für das zweite Modul 8 kann sich hierbei oberhalb der bestimmten Betriebsposition BP befinden.

Sofern sich das zweite Modul 8 in der bestimmten Betriebsposition BP befindet, stellt das Transportband 16 eine horizontale Transportebene bereit, entlang welcher die einzelnen Artikel oder Zusammenstellungen an Artikeln durch den umlaufenden Antrieb des Transportbandes 16 über den eigenen Aktor 18 des zweiten Moduls 8 bewegt werden. Insbesondere kann das zweite Modul 8 dazu ausgebildet bzw. vorbereitet sein, einzelne Artikel oder Zusammenstellungen an Artikeln zunächst ohne einen jeweiligen Zuschnitt an Verpackungsmaterial mittels des Transportbandes 16 zu bewegen. In einem Endbereich des Transportbandes 16 bzw. des zweiten Moduls 8 können die einzelnen Artikel oder Zusammenstellungen an Artikeln dann auf einen jeweiligen Zuschnitt an Verpackungsmaterial bzw. auf ein jeweiliges PAD auffahren und ggf. nach Auffahren auf den jeweiligen Zuschnitt an Verpackungsmaterial bzw. auf das jeweilige PAD auf eine Horizontalfördereinrichtung übertreten.

Aus Gründen der Vollständigkeit sei zudem erwähnt, dass sich in der Praxis auch Ausführungsformen bewährt haben, bei welchen die erste Moduleinheit 5 und die zweite Moduleinheit 7 aus der Position nach Fig. 1 zum Überführen des Systems 1 in einen zweiten Betriebsmodus B2 in vertikaler Richtung abgesenkt werden. Hierauf folgend kann eine Überschubplatte auf die erste Moduleinheit 5 und die zweite Moduleinheit 7 aufgesetzt werden, wobei die erste Moduleinheit 5 und die zweite Moduleinheit 7 die Überschubplatte gemeinsam tragen. Im zweiten Betriebsmodus B2 können sodann einzelne Artikel oder Zusammenstellungen an Artikeln, welche für die zweite Verpackungsart vorgesehen sind, gleitend entlang der Überschubplatte bewegt werden. Hierzu können ggf. umlaufende Transportelemente vorgesehen sein, welche mit den einzelnen Artikeln oder Zusammenstellungen an Artikeln rückseitig in Anlage treten und die einzelnen Artikel oder Zusammenstellungen an Artikeln im zweiten Betriebsmodus über die Überschubplatte schieben.

Die Fig. 4 zeigt eine schematische Ansicht einer weiteren Ausführungsform des erfindungsgemäßen Systems 1. Eine weitere Ausführungsform für die erste Moduleinheit 5 und die zweite Moduleinheit 7 sind in Fig. 4 zu erkennen.

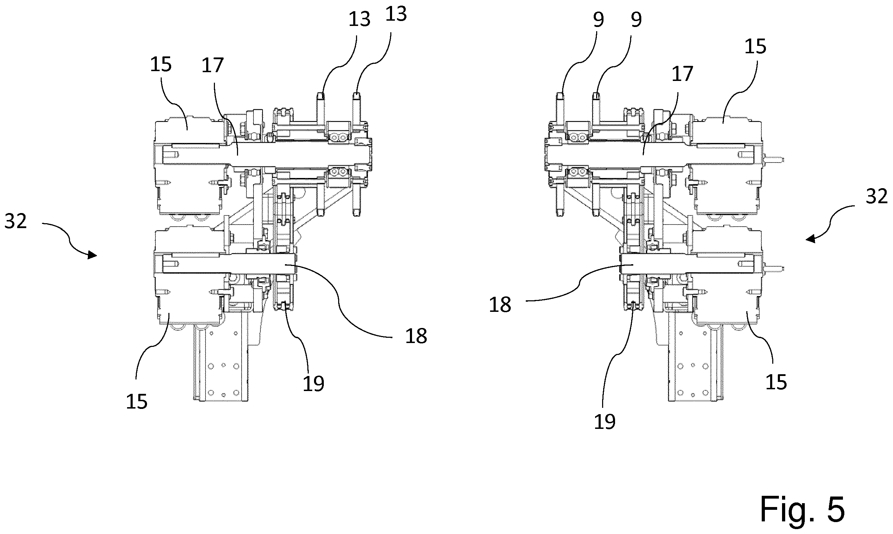

Die erste Moduleinheit 5 und die zweite Moduleinheit 7 umfassen jeweils zwei eigene Antriebe 15, von welchen in Fig. 4 jeweils ein Antrieb 15 zu erkennen ist und welche jeweils zwei eigenen Antriebe 15 eine Antriebseinheit 16 (vgl. Fig. 5) bilden. Über die eigenen Antriebe 15 der Antriebseinheiten 16 kann jeweils eine Vielzahl an Faltfingern 9 umlaufend bewegt werden. Somit wird über die eigenen Antriebe 15 der ersten Moduleinheit 5 eine erste Vielzahl an Faltfingern 9 und eine zweite Vielzahl an Faltfingern 9 der ersten Moduleinheit 5 jeweils umlaufend bewegt, wobei die erste Vielzahl und die zweite Vielzahl an Faltfingern 9 der ersten Moduleinheit 5 parallel zueinander geführt sind. Auch wird über die eigenen Antriebe 15 der zweiten Moduleinheit 7 eine erste Vielzahl an Faltfingern 9 und eine zweite Vielzahl an Faltfingern 9 der zweiten Moduleinheit 7 jeweils umlaufend bewegt, wobei die erste Vielzahl und die zweite Vielzahl an Faltfingern 9 der zweiten Moduleinheit 7 parallel zueinander geführt sind.

Das System 1 aus Fig. 4 umfasst zudem eine Linearführung 20, entlang welcher die erste Moduleinheit 5 und die zweite Moduleinheit 7 zum Ausführen einer horizontalen Relativbewegung mit hieraus resultierender Freigabe der bestimmten Betriebsposition BP bewegbar sind. Die Bewegung der ersten Moduleinheit 5 und der zweiten Moduleinheit 7 entlang der Linearführung 20 kann über einen in Fig. 4 nicht mit dargestellten Aktor bewirkt werden. Die Bezugsziffer 22 verweist auf eine Energiekette, in welcher elektrische und der jeweiligen Antriebseinheit 32 zugeordnete Leitungsverbindungen verlaufen bzw. in welcher elektrische und der jeweiligen Antriebseinheit 32 zugeordnete Leitungsverbindungen angeordnet sind. Auch können pneumatische Leitungsverbindungen in der Energiekette 22 verlaufen.

Weiter sind in Fig. 4 zwei vertikale Linearführungen 24 zu erkennen, wobei die erste Moduleinheit 5 an die linksseitig dargestellte vertikale Linearführung 24 und die zweite Moduleinheit 7 an die rechtsseitig dargestellte vertikale Linearführung 24 für eine jeweilige lotrechte Bewegung mechanisch gekoppelt sind. Die erste Moduleinheit 5 und die zweite Moduleinheit 7 können somit jeweils lotrecht entlang ihrer jeweiligen vertikalen Linearführung 24 angehoben und abgesenkt werden. In der Darstellung aus Fig. 4 wurden die erste Moduleinheit 5 und die zweite Moduleinheit 7 bereits anteilig aus der bestimmten Betriebsposition BP bewegt und sind nun in einer Warteposition angeordnet, in welcher die Faltfinger 9 der ersten Moduleinheit 5 und der zweiten Moduleinheit 7 nicht zum Aufrichten von Laschen durch Verpackungsmaterial ausgebildeter Zuschnitte vorgesehen sind. Eine in Fig. 4 nicht mit dargestellte Überschubplatte kann nun auf die in die Warteposition überführte erste Moduleinheit 5 sowie zweite Moduleinheit 7 aufgesetzt werden, so dass die erste Moduleinheit 5 und die zweite Moduleinheit 7 die Überschubplatte tragen. Über Transportelemente, welche ggf. rückseitig mit einzelnen Artikeln oder Zusammenstellungen an Artikeln in Anlage gebracht werden, können die einzelnen Artikel oder Zusammenstellungen an Artikeln sodann gleitend entlang der auf die erste Moduleinheit 5 und die zweite Moduleinheit 7 aufgesetzt Überschubplatte bewegt werden.

Sofern hierauf folgend mithilfe der jeweiligen Vielzahl an Faltfingern 9 der ersten Moduleinheit 5 und der zweiten Moduleinheit 7 Laschen an durch Verpackungsmaterial ausgebildeten Zuschnitten bzw. Trays aufgerichtet werden sollen, wird zunächst die auf die erste Moduleinheit 5 und die zweite Moduleinheit 7 aufgesetzte Überschubplatte von der ersten Moduleinheit 5 und der zweiten Moduleinheit 7 abgenommen. Zeitlich hierauf folgend werden die erste Moduleinheit 5 und die zweite Moduleinheit 7 entlang der Linearführung 20 in horizontaler Richtung relativ zueinander bewegt, wobei sich die erste Moduleinheit 5 und die zweite Moduleinheit 7 hierbei annähern und in die bestimmte Betriebsposition BP gelangen. Auch werden die erste Moduleinheit 5 und die zweite Moduleinheit 7 in lotrechter Richtung entlang der vertikalen Linearführung 24 angehoben oder abgesenkt, wonach die erste Moduleinheit 5 und die zweite Moduleinheit 7 in der bestimmten Betriebsposition BP über ihre jeweilige Vielzahl an Faltfingern 9 Laschen von Zuschnitten an Verpackungsmaterial aufrichten und hierzu umlaufend bewegt werden.

Die Fig. 5 zeigt eine schematische Schnittdarstellung durch die Ausführungsform eines Systems 1 aus Fig. 4. In Fig. 5 sind nun die Antriebseinheiten 32 der ersten Moduleinheit 5 und der zweiten Moduleinheit 7 zu erkennen, die jeweils aus zwei Antrieben 15 zur jeweiligen umlaufenden Bewegung einer jeweiligen Vielzahl an Faltfingern 9 bestehen. So wird über den jeweils zuoberst dargestellten Antrieb 15 der ersten Moduleinheit 5 und der zweiten Moduleinheit 7 (vgl. Fig. 4) die jeweilige Vielzahl an in Fig. 5 nicht mit dargestellten Faltfingern 9 über die innenliegenden Antriebskettenräder 13 umlaufend bewegt. Über den jeweiligen unteren Antrieb 15 der ersten Moduleinheit 5 und der zweiten Moduleinheit 7 wird die jeweilige Welle 18 angetrieben, welche eine Drehbewegung über die Kette 19auf eine umlaufende Bewegung der jeweiligen Vielzahl an mit den äußeren Antriebskettenrädern 13 jeweiligen in Verbindung stehenden Vielzahl an Faltfingern 9 überträgt.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 1: System
- 3: erstes Modul
- 5: erste Moduleinheit
- 7: zweite Moduleinheit
- 8: zweites Modul
- 9: Faltfinger
- 13: Antriebskettenrad
- 15: Antrieb
- 16: Transportband
- 17: Welle
- 18: Welle
- 19: Kette
- 20: Linearführung
- 22: Energiekette
- 24: vertikale Linearführung
- 32: Antriebseinheit

- BP: Bestimmte Betriebsposition
- B1: erster Betriebsmodus
- B2: zweiter Betriebsmodus

## Patentansprüche

1. System (1) zum Ausbilden eines Transportabschnittes für eine Verpackungsstrecke und Abstimmen des Transportabschnittes auf einzelne Artikel oder Zusammenstellungen an Artikeln mit unterschiedlichen Verpackungsarten, umfassend
- mindestens ein Modul (3), welches mindestens eine Modul (3) mindestens zwei einzelne Moduleinheiten (5, 7) besitzt, welche mindestens zwei einzelnen Moduleinheiten (5, 7) in einem ersten Betriebsmodus (B1) des Systems (1) zum Transport für eine erste Verpackungsart vorgesehener einzelner Artikel oder Zusammenstellungen an Artikeln zusammenarbeiten,
- wobei die mindestens zwei einzelnen Moduleinheiten (5, 7) jeweils bewegbar ausgebildet sind und wobei das Systems (1) über eine Bewegung der mindestens zwei einzelnen Moduleinheiten (5, 7) in einen zweiten Betriebsmodus (B2) überführbar ist, der auf einen Transport für eine zweite Verpackungsart, die sich von der ersten Verpackungsart unterscheidet, vorgesehener einzelner Artikel oder Zusammenstellungen an Artikel ausgerichtet ist, wobei
- wenigstens eine erste Moduleinheit (5) und wenigstens eine zweite Moduleinheit (7) der mindestens zwei einzelnen Moduleinheiten (5, 7) jeweils mehrere bzw. jeweils eine Vielzahl an umlaufend bewegten Faltfingern (9) ausbilden bzw. aufweisen, welche mehreren bzw. jeweilige Vielzahl umlaufend bewegter Faltfinger (9) zum Aufrichten von Laschen einzelner Zuschnitte an Verpackungsmaterial ausgebildet ist bzw. sind und dass
- die wenigstens eine erste Moduleinheit (5) und die wenigstens eine zweite Moduleinheit (7) jeweils mindestens einen eigenen Antrieb (15) umfassen, welcher mindestens eine eigene Antrieb (15) der wenigstens einen ersten Moduleinheit (5) zur vorzugsweise umlaufenden Bewegung der Vielzahl an Faltfingern (9) der wenigstens einen ersten Moduleinheit (5) ausgebildet ist und welcher wenigstens eine eigene Antrieb (15) der wenigstens einen zweiten Moduleinheit (7) zur vorzugsweise umlaufenden Bewegung der Vielzahl an Faltfingern (9) der wenigstens einen zweiten Moduleinheit (7) ausgebildet ist **dadurch gekennzeichnet, dass** der mindestens eine eigene Antrieb (15) der wenigstens einen ersten Moduleinheit (5) und der mindestens eine eigene Antrieb (15) der wenigstens einen zweiten Moduleinheit (7) unabhängig voneinander betätigt werden können.

2. System nach Anspruch 1, bei welcher die mindestens zwei einzelnen Moduleinheiten (5, 7) für den zweiten Betriebsmodus (B2) in Richtung nach unten bewegbar sind und bei welcher das System eine Überschubplatte umfasst, welche für den zweiten Betriebsmodus (B2) auf die mindestens zwei einzelnen in Richtung nach unten bewegten Moduleinheiten (5, 7) aufgesetzt werden kann.

3. System nach Anspruch 2, umfassend mindestens eine vertikale Linearführung (24), an welche die zwei einzelnen Moduleinheiten (5, 7) für ihre Bewegung in Richtung nach unten mechanisch gekoppelt sind.

4. System nach einem der Ansprüche 1 bis 3, umfassend wenigstens ein weiteres Modul (8), welches wenigstens eine weitere Modul (8) auf einen Transport für die zweite Verpackungsart vorgesehener einzelner Artikel oder Zusammenstellungen an Artikeln ausgerichtet ist, wobei die mindestens zwei einzelnen Moduleinheiten (5, 7) des mindestens einen ersten Moduls (3) relativ zueinander bewegbar sind und wobei das wenigstens eine weitere Modul (8) für den zweiten Betriebsmodus (B2) in eine mittels der relativen Bewegung der mindestens zwei einzelnen Moduleinheiten (5, 7) zueinander freigegebene Betriebsposition (BP) eingebracht werden kann.

5. System nach Anspruch 4, bei welchem das wenigstens eine weitere Modul (8) ein Transportband (16) und einen eigenen Antrieb (18) umfasst, wobei das Transportband (16) im zweiten Betriebsmodus (B2) des Systems (1) über den eigenen Antrieb (18) zum Fördern der einzelnen Artikel oder Zusammenstellungen an Artikeln umlaufend bewegt werden kann.

6. System nach Anspruch 1, bei welchem die wenigstens eine erste Moduleinheit (5) mit ihrem mindestens einen eigenen Antrieb (15) und die wenigstens eine zweite Moduleinheit (7) mit ihrem mindestens einen eigenen Antrieb (15) zum Ausführen einer Relativbewegung ausgebildet sind, über welche Relativbewegung das System (1) in den zweiten Betriebsmodus (B2) überführbar ist.

7. System nach Anspruch 1 oder Anspruch 6, umfassend ein Mittel oder mehrere Mittel zum Feststellen einer jeweiligen Ist-Position der Vielzahl an Faltfingern (9) der wenigstens einen ersten Moduleinheit (5) und der Vielzahl an Faltfingern (9) der wenigstens einen zweiten Moduleinheit (7), wobei der mindestens eine eigene Antrieb (15) der wenigstens einen ersten Moduleinheit (5) und der mindestens eine eigene Antrieb (15) der wenigstens einen zweiten Moduleinheit (7) zur definierten Relativbewegung der Vielzahl an Faltfingern (9) der wenigstens einen ersten Moduleinheit (3) gegenüber der Vielzahl an Faltfingern (9) der wenigstens einen zweiten Moduleinheit (7) unter Berücksichtigung der jeweils festgestellten Ist-Position aufeinander abgestimmt ansteuerbar sind und wobei insbesondere vorgesehen ist, dass
das System mehrere Mittel zum Feststellen einer jeweiligen Ist-Position der Vielzahl an Faltfingern (9) der wenigstens einen ersten Moduleinheit (5) und der Vielzahl an Faltfingern der wenigstens einen zweiten Moduleinheit (7) umfasst, welche mehreren Mittel wenigstens ein der jeweiligen Vielzahl an Faltfingern (9) zugeordnetes Lesegerät oder wenigstens einen der jeweiligen Vielzahl an Faltfingern (9) zugeordneten Sensor sowie wenigstens einen der jeweiligen Vielzahl an Faltfingern (9) zugeordneten Lagegeber umfassen.

8. System nach einem der Ansprüche 1 bis 7, mit einer Vielzahl an umlaufend geführten Transportelementen zur Bewegung der jeweiligen einzelnen Artikel oder Zusammenstellungen an Artikeln, wobei die einzelnen Artikel oder Zusammenstellungen an Artikeln im zweiten Betriebsmodus (B2) des Systems (1) über die Vielzahl an umlaufend geführten Transportelementen unter rückseitiger Anlage an der Vielzahl an umlaufend geführten Transportelementen bewegbar sind.

9. Verpackungsstrecke für einzelne Artikel oder Zusammenstellungen an Artikeln, umfassend
- einen Zulauf für die einzelnen Artikel oder Zusammenstellungen an Artikeln,
- einen an den Zulauf anschließenden und durch ein System (1) nach einem der Ansprüche 1 bis 8 ausgebildeten Transportabschnitt für die einzelnen Artikel oder Zusammenstellungen an Artikeln,
- mindestens eine Horizontalfördereinrichtung für Artikel oder Zusammenstellungen an Artikeln, welche mindestens eine Horizontalfördereinrichtung auf den Transportabschnitt folgt, sowie
- eine Einrichtung, über welche wahlweise und in Abhängigkeit des jeweiligen durch das System (1) ausgebildeten ersten oder zweiten Betriebsmodus (B1, B2) flächige Zuschnitte an Verpackungsmaterial in Bewegungsrichtung der einzelnen Artikel oder Zusammenstellungen an Artikeln vor oder nach dem Transportabschnitt in einen entlang der Verpackungsstrecke für die einzelnen Artikel oder Zusammenstellungen an Artikeln ausgebildeten Transportweg eingebracht werden können.

10. Verfahren zum Modifizieren einer für Artikel oder Zusammenstellungen an Artikeln vorgesehenen Verpackungsstrecke, das Verfahren umfassend folgende Schritte:
- Transportieren von Artikeln oder Zusammenstellungen an Artikeln über mindestens ein Modul (3) in einem ersten Betriebsmodus (B1) der Verpackungsstrecke, welches mindestens eine Modul (3) mindestens zwei einzelne im ersten Betriebsmodus (B1) zusammenarbeitende Moduleinheiten (5, 7) besitzt, auf einen Transport für eine erste Verpackungsart vorgesehener einzelner Artikel oder Zusammenstellungen an Artikeln ausgerichtet ist und im ersten Betriebsmodus (B1) einen Transportabschnitt der Verpackungsstrecke ausbildet,
- jeweiliges Bewegen der mindestens zwei einzelnen Moduleinheiten (5, 7), woraus resultierend der Transportabschnitt für einen zweiten Betriebsmodus (B2) der Verpackungsstrecke angepasst wird, welcher zweite Betriebsmodus (B2) zum Transport von einzelnen Artikeln oder Zusammenstellungen an Artikeln ausgerichtet ist, die für eine zweite sich von der ersten Verpackungsart unterscheidende Verpackungsart vorgesehen sind, wobei die mindestens zwei einzelnen Moduleinheiten (5, 7) jeweils mindestens einen eigenen Antrieb (15) umfassen und zusammen mit ihrem jeweiligen mindestens einen eigenen Antrieb (15) zum Anpassen des Transportabschnittes für den zweiten Betriebsmodus (B2) eine Relativbewegung ausführen,
wobei wenigstens eine erste Moduleinheit (5) und wenigstens eine zweite Moduleinheit (7) des mindestens einen ersten Moduls (3) jeweils eine Vielzahl an umlaufend geführten Faltfingern (9) ausbilden, wobei die Vielzahl an umlaufend geführten Faltfingern (9) der wenigstens einen ersten Moduleinheit (5) und die Vielzahl an umlaufend geführten Faltfingern (9) der wenigstens einen zweiten Moduleinheit (7) im ersten Betriebsmodus (B1) der Verpackungsstrecke Laschen von mit den einzelnen Artikeln oder Zusammenstellungen an Artikeln in Verbindung stehenden Zuschnitten an Verpackungsmaterial aufrichten, wobei die Vielzahl an umlaufend geführten Faltfingern (9) der wenigstens einen ersten Moduleinheit (5) und die Vielzahl an umlaufend geführten Faltfingern (9) der wenigstens einen zweiten Moduleinheit (7) im ersten Betriebsmodus (B1) der Verpackungsstrecke über einen jeweiligen eigenen Antrieb (15) umlaufend bewegt wird und wobei der eigene Antrieb (15) der wenigstens einen ersten Moduleinheit (5) und der eigene Antrieb (15) der wenigstens einen zweiten Moduleinheit (7) zusammen mit der jeweiligen Moduleinheit (5, 7) im Rahmen einer zur Anpassung der Verpackungsstrecke an den zweiten Betriebsmodus (B2) durchgeführten Relativbewegung der wenigstens einen ersten Moduleinheit (5) gegenüber der wenigstens einen zweiten Moduleinheit (7) zusammen mit seiner jeweiligen Moduleinheit (5, 7) bewegt wird,
**dadurch gekennzeichnet, dass** eine jeweilige Ist-Position einzelner umlaufend bewegter Faltfinger (9) der Vielzahl der wenigstens einen ersten Moduleinheit (5) und eine jeweilige Ist-Position einzelner umlaufend bewegter Faltfinger (9) der Vielzahl der wenigstens einen zweiten Moduleinheit (7) festgestellt und/oder ermittelt wird und wobei die eigenen Antriebe (15) der wenigstens einen ersten Moduleinheit (5) und der wenigstens einen zweiten Moduleinheit (7) unter Berücksichtigung der erfassten Ist-Positionen zum definierten Ausrichten der Vielzahl an einzelnen Faltfingern (9) der wenigstens einen ersten Moduleinheit (5) gegenüber der Vielzahl an Faltfingern (9) der wenigstens einen zweiten Moduleinheit (7) angesteuert werden.

11. Verfahren nach Anspruch 10, bei welchem die zwei einzelnen Moduleinheiten (5, 7) zum Anpassen des Transportabschnittes für den zweiten Betriebsmodus (B2) jeweils in Richtung nach unten bewegt werden und wobei zeitlich nach der jeweiligen Bewegung in Richtung nach unten eine Überschubplatte auf die zwei einzelnen Moduleinheiten (5, 7) aufgesetzt wird und einzelne Artikel oder Zusammenstellungen an Artikeln, die für die zweite Verpackungsart vorgesehen sind, gleitend entlang der auf die zwei einzelnen Moduleinheiten (5, 7) aufgesetzten Überschubplatte bewegt werden.

12. Verfahren nach Anspruch 10 oder Anspruch 11, bei welchem die mindestens zwei einzelnen Moduleinheiten (5, 7) relativ zueinander bewegt werden, wobei die mindestens zwei einzelnen Moduleinheiten (5, 7) den Transportabschnitt zumindest abschnittsweise verlassen und worauf zeitlich folgend wenigstens ein weiteres Modul (8) in den Transportabschnitt eingebracht wird, welches wenigstens eine weitere Modul (8) im Transportabschnitt der Verpackungsstrecke einzelne Artikel oder Zusammenstellungen an Artikeln, die für die zweite Verpackungsart vorgesehen sind, entlang des Transportabschnittes bewegt.

13. Verfahren nach einem der Ansprüche 10 bis 12, bei welchem die mindestens zwei Moduleinheiten mittels der Relativbewegung in Richtung auf gegenüberliegenden Seiten des Transportabschnittes angeordnete Wartepositionen überführt werden, worauf das wenigstens eine zweite Modul (8) in den Transportabschnitt eingebracht wird und wobei die mindestens zwei einzelnen Moduleinheiten (5, 7) während des Einbringens des zweiten Moduls (8) in den Transportabschnitt und/oder während eines Transportes für eine zweite Verpackungsart vorgesehener einzelner Artikel oder Zusammenstellungen an Artikeln durch das wenigstens eine zweite in den Transportabschnitt eingebrachte Modul (8) in ihrer jeweiligen Warteposition verbleiben.

14. Verfahren nach Anspruch 10, bei welchem die jeweilige Ist-Position mittels mindestens eines Lesegeräts oder mittels mindestens einen Sensors und mindestens eines Lagegebers festgestellt und/oder ermittelt wird, wobei das mindestens eine Lesegerät oder der mindestens eine Sensor und der mindestens eine Lagegeber insbesondere oder vorzugsweise durch mindestens ein System, gebildet aus magnetisch wirksamen Lagegebern und durch einen Reedschalter als mindestens einen Sensor, ausgebildet sind.

## Claims

1. A system (1) for forming a transport section for a packaging line and for adapting the transport section to individual articles or article sets with different packaging types, the system comprising
- at least one module (3), said at least one module (3) having at least two individual module units (5, 7), said at least two individual module units (5, 7) cooperating with each other in a first operating mode (B1) of the system (1) for the transport of individual articles or article sets provided for a first packaging type,
- wherein the at least two individual module units (5, 7) are each designed to be movable, and wherein the system (1) is transferable by way of a movement of the at least two individual module units (5, 7) into a second operating mode (B2), which second operating mode (B2) is designed for a transport of individual articles or article sets provided for a second packaging type, which second packaging type differs from the first packaging type, wherein
- at least one first module unit (5) and at least one second module unit (7) of the at least two individual module units (5, 7) forming or having, as the case may be, a plurality each or a multitude each, as the case may be, of circumferentially moved folding fingers (9), said plurality or said respective multitude, as the case may be, of circumferentially moved folding fingers (9) being formed for erecting flaps of individual blanks of packaging material and that
- the at least one first module unit (5) and the at least one second module unit (7) each comprising at least one own drive (15), said at least one own drive (15) of the at least one first module unit (5) being designed for the preferably circulating movement of the multitude of folding fingers (9) of the at least one first module unit (5), and said at least one own drive (15) of the at least one second module unit (7) being designed for the preferably circulating movement of the multitude of folding fingers (9) of the at least one second module unit (7), **characterized in that** the at least one own drive (15) of the at least one first module unit (5) and the at least one own drive (15) of the at least one second module unit (7) can be operated independently of one another.

2. The system as recited in claim 1, in which the at least two individual module units (5, 7) being downwardly movable for the second operating mode (B2), and in which the system comprises a transfer plate, which transfer plate can be placed onto the at least two downwardly moved individual module units (5, 7) for the second operating mode (B2).

3. The system as recited in claim 2, comprising at least one vertical linear guiding means (24) to which the two individual module units (5, 7) are mechanically coupled for their downward movement.

4. The system as recited in one of the claims 1 to 3, comprising at least one further module (8), said at least one further module (8) being aligned to a transport of individual articles or article sets provided for the second packaging type, wherein the at least two individual module units (5, 7) of the at least one first module (3) are movable relative to each other, and wherein the at least one further module (8) can be inserted for the second operating mode (B2) into an operating position (BP) vacated by means of the relative movement of the at least two individual module units (5, 7) relative to each other.

5. The system as recited in claim 4, with the at least one further module (8) comprising a conveyor belt (16) and an own drive (18), wherein, in the second operating mode (B2) of the system (1), the conveyor belt (16) can be moved in a circulating manner by the own drive (18) for conveying the individual articles or article sets.

6. The system as recited in claim 1, in which the at least one first module unit (5) with its at least one own drive (15) and the at least one second module unit (7) with its at least one own drive (15) are designed for carrying out a relative movement, by way of which relative movement the system (1) is transferable into the second operating mode (B2).

7. The system as recited in claim 1 or claim 6, comprising a means or a plurality of means for determining a particular actual position of the multitude of folding fingers (9) of the at least one first module unit (5) and of the multitude of folding fingers (9) of the at least one second module unit (7), wherein the at least one own drive (15) of the at least one first module unit (5) and the at least one own drive (15) of the at least one second module unit (7) are controllable in a coordinated manner for the defined relative movement of the plurality of folding fingers (9) of the at least one first modular unit (3) with respect to the plurality of folding fingers (9) of the at least one second modular unit (7), taking into account the respectively determined actual position, and wherein it is provided in particular that
the system comprising a plurality of means for determining a particular actual position of the multitude of folding fingers (9) of the at least one first module unit (5) and of the multitude of folding fingers of the at least one second module unit (7), said plurality of means comprising at least one reading device associated with the particular multitude of folding fingers (9) or at least one sensor associated with the particular multitude of folding fingers (9) and also comprising at least one position sensor associated with the particular multitude of folding fingers (9).

8. The system as recited in one of the claims 1 to 7, with a multitude of circumferentially guided transport elements for moving the particular individual articles or article sets, wherein, in the second operating mode (B2) of the system (1), the individual articles or article sets are movable by the multitude of circumferentially guided transport elements, with the rear ends of the individual articles or article sets in contiguous contact with the multitude of circumferentially guided transport elements.

9. A packaging line for individual articles or article sets, comprising
- an infeed for the individual articles or article sets ,
- a transport section for the individual articles or article sets, said transport section following the infeed and being formed by a system (1) as recited in one of the claims 1 to 8,
- at least one horizontal conveying device for articles or article sets, said at least one horizontal conveying device located downstream of the transport section; and also
- a device by way of which, optionally and depending on the particular first or second operating mode (B1, B2) formed by the system (1), planar blanks of packaging material can be introduced upstream or downstream from the transport section, in movement direction of the individual articles or article sets, into a transport path formed along the packaging line for the individual articles or article sets.

10. A method for modifying a packaging line provided for articles or article sets, the method comprising the following steps:
- transporting articles or article sets by way of at least one module (3) in a first operating mode (B1) of the packaging line, said at least one module (3) having at least two individual module units (5, 7) cooperating with each other in the first operating mode (B1), said at least one module (3) being designed for a transport of individual articles or article sets provided for a first packaging type, and said at least one module (3) in the first operating mode (B1) forming a transport section of the packaging line,
- in each case moving the at least two individual module units (5, 7) with the result of the transport section being adapted for a second operating mode (B2) of the packaging line, said second operating mode (B2) being designed for a transport of individual articles or article sets provided for a second packaging type, which second packaging type differs from the first packaging type,
wherein the at least two individual module units (5, 7) each comprise at least one own drive (15) and each carry out a relative movement together with their particular at least one drive (15) for the purpose of adapting the transport section for the second operating mode (B2),
wherein at least one first module unit (5) and at least one second module unit (7) of the at least one first module (3) each forming a multitude of circumferentially guided folding fingers (9), wherein the multitude of circumferentially guided folding fingers (9) of the at least one first module unit (5) and the multitude of circumferentially guided folding fingers (9) of the at least one second module unit (7) in the first operating mode (B1) of the packaging line erect flaps of blanks of packaging material that are in contact with the individual articles or article sets, wherein the multitude of circumferentially guided folding fingers (9) of the at least one first module unit (5) and the multitude of circumferentially guided folding fingers (9) of the at least one second module unit (7) being circumferentially moved in the first operating mode (B1) of the packaging line by a respective own drive (15), and wherein the own drive (15) of the at least one first module unit (5) and the own drive (15) of the at least one second module unit (7) are moved together with the particular module unit (5, 7) in the context of a relative movement of the at least one first module unit (5) in relation to the at least one second module unit (7) together with each particular module unit (5, 7), said relative movement being carried out for adapting the packaging line to the second operating mode (B2),
**characterized in that** a respective actual position of individual circumferentially moved folding fingers (9) from the multitude of folding fingers (9) of the at least one first module unit (5) and a respective actual position of individual circumferentially moved folding fingers (9) from the multitude of folding fingers (9) of the at least one second module unit (7) being determined and/or identified, and wherein the own drives (15) of the at least one first module unit (5) and of the at least one second module unit (7) are controlled, in consideration of the detected actual positions, for the purpose of the specified alignment of the multitude of individual folding fingers (9) of the at least one first module unit (5) in relation to the multitude of folding fingers (9) of the at least one second module unit (7).

11. The method as recited in claim 10, in which the two individual module units (5, 7) being each moved downward for adapting the transport section for the second operating mode (B2), and wherein, temporally after the particular downward movement, a transfer plate is placed onto the two individual module units (5, 7), and individual articles or article sets provided for a second packaging type are moved in a sliding manner along the transfer plate that has been placed onto the two individual module units (5, 7).

12. The method as recited in claim 10 or in claim 11, in which the at least two individual module units (5, 7) being moved relative to each other, wherein the at least two individual module units (5, 7) leave the transport section at least in some sections, and temporally following whereupon at least one further module (8) is inserted into the transport section, said at least one further module (8) in the transport section of the packaging line moving individual articles or article sets provided for the second packaging type along the transport section.

13. The method as recited in one of the claims 10 to 12, in which the at least two module units being transferred by means of the relative movement toward waiting positions disposed at oppositely located sides of the transport section, whereupon the at least one second module (8) is inserted into the transport section, and wherein the at least two individual module units (5, 7) remain in their particular waiting position while the second module (8) is being inserted into the transport section and/or while individual articles or article sets provided for a second packaging type are being transported by way of the at least one second module (8) that is inserted in the transport section.

14. The method as recited in claim 10, in which the particular actual position being determined and/or identified by means of at least one reading device or by means of at least one sensor and at least one position sensor, wherein the at least one reading device or the at least one sensor and the at least one position sensor are in particular or preferably formed by at least one system, said system being made from magnetically active position sensors and by one reed switch as at least one sensor.

## Revendications

1. Système (1) destiné à former une section de transport pour un trajet d'emballage et à adapter la section de transport à des articles individuels ou ensembles d'articles ayant des types différents d'emballage, comprenant
- au moins un module (3), lequel au moins un module (3) comprend au moins deux unités de module (5, 7) individuelles, lesquelles au moins deux unités de module (5, 7) individuelles coopèrent dans un premier mode de fonctionnement (B1) du système (1) pour le transport d'articles individuels ou ensembles d'articles prévus pour un premier type d'emballage,
- dans lequel lesdites au moins deux unités de module (5, 7) individuelles sont conçues chacune de manière déplaçable, et dans lequel le système (1) peut passer, par l'intermédiaire d'un mouvement desdites au moins deux unités de module (5, 7) individuelles, à un deuxième mode de fonctionnement (B2) qui est destiné à un transport d'articles individuels ou ensembles d'articles prévus pour un deuxième type d'emballage qui est différent du premier type d'emballage, dans lequel
- au moins une première unité de module (5) et au moins une deuxième unité de module (7) desdites au moins deux unités de module (5, 7) individuelles forment ou bien présentent chacune plusieurs ou bien chacune une pluralité de doigts de pliage (9) déplacés en circulation, lesquels plusieurs ou bien laquelle pluralité respective de doigts de pliage (9) déplacés en circulation est ou bien sont conçu(s) pour dresser des languettes de découpes individuelles de matériau d'emballage , et dans lequel
- ladite au moins une première unité de module (5) et ladite au moins une deuxième unité de module (7) comprennent chacune au moins un propre mécanisme d'entraînement (15), lequel au moins un propre mécanisme d'entraînement (15) de ladite au moins une première unité de module (5) est conçu pour déplacer de préférence en circulation ladite pluralité de doigts de pliage (9) de ladite au moins une première unité de module (5), et lequel au moins un propre mécanisme d'entraînement (15) de ladite au moins une deuxième unité de module (7) est conçu pour déplacer de préférence en circulation ladite pluralité de doigts de pliage (9) de ladite au moins une deuxième unité de module (7), **caractérisé par le fait que** ledit au moins un propre mécanisme d'entraînement (15) de ladite au moins une première unité de module (5) et ledit au moins un propre mécanisme d'entraînement (15) de ladite au moins une deuxième unité de module (7) peuvent être actionnés indépendamment les uns des autres.

2. Système selon la revendication 1, dans lequel lesdites au moins deux unités de module (5, 7) individuelles peuvent être déplacées vers le bas pour le deuxième mode de fonctionnement (B2), et dans lequel le système comprend une plaque de transfert par poussée qui, pour le deuxième mode de fonctionnement (B2), peut être posée sur lesdites au moins deux unités de module (5, 7) individuelles déplacées vers le bas.

3. Système selon la revendication 2, comprenant au moins un guide linéaire vertical (24) auquel les deux unités de module (5, 7) individuelles sont couplés mécaniquement pour leur déplacement dirigé vers le bas.

4. Système selon l'une quelconque des revendications 1 à 3, comprenant au moins un autre module (8), lequel au moins un autre module (8) est destiné à un transport d'articles individuels ou ensembles d'articles prévus pour le deuxième type d'emballage, dans lequel lesdites au moins deux unités de module (5, 7) individuelles dudit au moins un premier module (3) peuvent être déplacées les unes par rapport aux autres, et dans lequel, pour le deuxième mode de fonctionnement (B2), ledit au moins un autre module (8) peut être placé dans une position de fonctionnement (BP) libérée grâce au mouvement relatif les unes par rapport aux autres desdites au moins deux unités de module (5, 7) individuelles.

5. Système selon la revendication 4, dans lequel ledit au moins un autre module (8) comprend une bande transporteuse (16) et un propre mécanisme d'entraînement (18), dans lequel, dans le deuxième mode de fonctionnement (B2) du système (1), ladite bande transporteuse (16) peut être déplacée en circulation par le propre mécanisme d'entraînement (18) pour transporter les articles individuels ou ensembles d'articles.

6. Système selon la revendication 1, dans lequel ladite au moins une première unité de module (5) avec son au moins un propre mécanisme d'entraînement (15) et ladite au moins une deuxième unité de module (7) avec son au moins un propre mécanisme d'entraînement (15) sont conçues pour effectuer un mouvement relatif, par lequel mouvement relatif on peut faire passer le système (1) au deuxième mode de fonctionnement (B2).

7. Système selon la revendication 1 ou la revendication 6, comprenant un moyen ou plusieurs moyens destiné(s) à détecter une position réelle respective de la pluralité de doigts de pliage (9) de ladite au moins une première unité de module (5) et de la pluralité de doigts de pliage (9) de ladite au moins une deuxième unité de module (7), dans lequel ledit au moins un propre mécanisme d'entraînement (15) de ladite au moins une première unité de module (5) et ledit au moins un propre mécanisme d'entraînement (15) de ladite au moins une deuxième unité de module (7) peuvent être commandés en étant accordés les uns aux autres pour le mouvement relatif défini de la pluralité de doigts de pliage (9) de ladite au moins une première unité de module (5) par rapport à la pluralité de doigts de pliage (9) de ladite au moins une deuxième unité de module (7), en prenant en considération la position réelle respectivement détectée, et dans lequel il est prévu en particulier que
le système comprend une pluralité de moyens pour détecter une position réelle respective de la pluralité de doigts de pliage (9) de ladite au moins une première unité de module (5) et de la pluralité de doigts de pliage de ladite au moins une deuxième unité de module (7), lesquels plusieurs moyens comprennent au moins un lecteur associé à la pluralité respective de doigts de pliage (9) ou au moins un capteur associé à la pluralité respective de doigts de pliage (9) ainsi qu'au moins un capteur de position associé à la pluralité respective de doigts de pliage (9).

8. Système selon l'une quelconque des revendications 1 à 7, comprenant une pluralité d'éléments de transport guidés en circulation pour déplacer les articles individuels ou ensembles d'articles respectifs, dans lequel, dans le deuxième mode de fonctionnement (B2) du système (1), les articles individuels ou ensembles d'articles peuvent être déplacés par ladite pluralité d'éléments de transport guidés en circulation, tout en étant en appui arrière sur la pluralité d'éléments de transport guidés en circulation.

9. Trajet d'emballage pour des articles individuels ou ensembles d'articles, comprenant
- une amenée pour les articles individuels ou ensembles d'articles,
- une section de transport pour les articles individuels ou ensembles d'articles qui suit l'amenée et est formée par un système (1) selon l'une quelconque des revendications 1 à 8,
- au moins un dispositif de transport horizontal pour des articles ou ensembles d'articles, lequel au moins un dispositif de transport horizontal suit ladite section de transport, ainsi qu'
- un dispositif par l'intermédiaire duquel des découpes plates de matériau d'emballage peuvent être introduites au choix et en fonction du premier ou du deuxième mode de fonctionnement (B1, B2) respectif formé par le système (1), dans la direction de déplacement des articles individuels ou ensembles d'articles, en amont ou en aval de la section de transport, dans un chemin de transport conçu pour les articles individuels ou ensembles d'articles le long du trajet d'emballage.

10. Procédé de modification d'un trajet d'emballage prévu pour des articles ou ensembles d'articles, ledit procédé comprenant les étapes suivantes consistant à:
- transporter des articles ou ensembles d'articles par au moins un module (3) dans un premier mode de fonctionnement (B1) du trajet d'emballage, lequel au moins un module (3) comprend au moins deux unités de module (5, 7) individuelles coopérant dans le premier mode de fonctionnement (B1), est destiné à un transport d'articles individuels ou ensembles d'articles prévus pour un premier type d'emballage et forme une section de transport du trajet d'emballage dans le premier mode de fonctionnement (B1),
- déplacer respectivement lesdites au moins deux unités de module (5, 7) individuelles, d'où résulte que la section de transport est adaptée pour un deuxième mode de fonctionnement (B2) du trajet d'emballage, lequel deuxième mode de fonctionnement (B2) est destiné au transport d'articles individuels ou ensembles d'articles qui sont prévus pour un deuxième type d'emballage différent du premier type d'emballage,
dans lequel lesdites au moins deux unités de module (5, 7) individuelles comprennent chacune au moins un propre mécanisme d'entraînement (15) et exercent, conjointement avec leur au moins un propre mécanisme d'entraînement (15) respectif, un mouvement relatif pour adapter la section de transport pour le deuxième mode de fonctionnement (B2),
dans lequel au moins une première unité de module (5) et au moins une deuxième unité de module (7) dudit au moins un premier module (3) forment chacune une pluralité de doigts de pliage (9) guidés en circulation, dans lequel, dans le premier mode de fonctionnement (B1) du trajet d'emballage, la pluralité de doigts de pliage (9) guidés en circulation de ladite au moins une première unité de module (5) et la pluralité de doigts de pliage (9) guidés en circulation de ladite au moins une deuxième unité de module (7) dressent des languettes de découpes de matériau d'emballage qui sont en contact avec les articles individuels ou ensembles d'articles, dans lequel, dans le premier mode de fonctionnement (B1) du trajet d'emballage, la pluralité de doigts de pliage (9) guidés en circulation de ladite au moins une première unité de module (5) et la pluralité de doigts de pliage (9) guidés en circulation de ladite au moins une deuxième unité de module (7) est déplacée en circulation par un propre mécanisme d'entraînement (15) respectif, et dans lequel ledit propre mécanisme d'entraînement (15) de ladite au moins une première unité de module (5) et ledit propre mécanisme d'entraînement (15) de ladite au moins une deuxième unité de module (7) est déplacé, conjointement avec son unité de module (5, 7) respective, dans le cadre d'un mouvement relatif de ladite au moins une première unité de module (5) par rapport à ladite au moins une deuxième unité de module (7), effectué pour adapter le trajet d'emballage au deuxième mode de fonctionnement (B2),
**caractérisé par le fait qu'**une position réelle respective de doigts de pliage (9) individuels déplacés en circulation de la pluralité de ladite au moins une première unité de module (5) et une position réelle respective de doigts de pliage (9) individuels déplacés en circulation de la pluralité de ladite au moins une deuxième unité de module (7) est détectée et/ou déterminée, et dans lequel les propres mécanismes d'entraînement (15) de ladite au moins une première unité de module (5) et de ladite au moins une deuxième unité de module (7) sont commandés, en prenant en considération les positions réelles détectées, pour aligner de manière définie la pluralité de doigts de pliage (9) individuels de ladite au moins une première unité de module (5) par rapport à la pluralité de doigts de pliage (9) de ladite au moins une deuxième unité de module (7).

11. Procédé selon la revendication 10, dans lequel les deux unités de module (5, 7) individuelles sont déplacées chacune vers le bas pour adapter la section de transport pour le deuxième mode de fonctionnement (B2), et dans lequel, après le déplacement respectif dirigé vers le bas, une plaque de transfert par poussée est posée sur les deux unités de module (5, 7) individuelles et des articles individuels ou ensembles d'articles qui sont prévus pour le deuxième type d'emballage sont déplacés à glissement le long de ladite plaque de transfert par poussée posée sur les deux unités de module (5, 7) individuelles.

12. Procédé selon la revendication 10 ou la revendication 11, dans lequel lesdites au moins deux unités de module (5, 7) individuelles sont déplacées les unes par rapport aux autres, dans lequel lesdites au moins deux unités de module (5, 7) individuelles quittent la section de transport au moins par sections, et ce après quoi au moins un autre module (8) est introduit dans la section de transport, lequel au moins un autre module (8) déplace, dans la section de transport du trajet d'emballage, des articles individuels ou ensembles d'articles qui sont prévus pour le deuxième type d'emballage, le long de la section de transport.

13. Procédé selon l'une quelconque des revendications 10 à 12, dans lequel lesdites au moins deux unités de module sont transférées, au moyen du mouvement relatif, en direction de positions d'attente disposées sur des côtés opposés de la section de transport, ce après quoi ledit au moins un deuxième module (8) est introduit dans la section de transport, et dans lequel lesdites au moins deux unités de module (5, 7) individuelles restent dans leur position d'attente respective pendant l'introduction du deuxième module (8) dans la section de transport et/ou pendant un transport d'articles individuels ou ensembles d'articles prévus pour un deuxième type d'emballage par ledit au moins un deuxième module (8) introduit dans la section de transport.

14. Procédé selon la revendication 10, dans lequel la position réelle respective est détectée et/ou déterminée au moyen d'au moins un lecteur ou au moyen d'au moins un capteur et d'au moins un capteur de position, dans lequel ledit au moins un lecteur ou ledit au moins un capteur et ledit au moins un capteur de position est réalisé en particulier ou de préférence par au moins un système formé de capteurs de position magnétiquement actifs et par un interrupteur à lames en tant qu'au moins un capteur.
